(19) Europäisches Patentamt
European Patent Office
Office européen des brevets

(11) Veröffentlichungsnummer: **0 158 882**
**B1**

# (12) EUROPÄISCHE PATENTSCHRIFT

(45) Veröffentlichungstag der Patentschrift: **16.12.87**

(51) Int. Cl.⁴: **C 09 B 62/002,** D 06 P 3/66, D 06 P 3/10

(21) Anmeldenummer: **85103669.9**

(22) Anmeldetag: **27.03.85**

(54) **Triphendioxazin-Farbstoffe.**

(30) Priorität: **05.04.84 DE 3412729**
**31.10.84 DE 3439755**

(43) Veröffentlichungstag der Anmeldung:
**23.10.85 Patentblatt 85/43**

(45) Bekanntmachung des Hinweises auf die Patenterteilung:
**16.12.87 Patentblatt 87/51**

(84) Benannte Vertragsstaaten:
**CH DE FR GB IT LI**

(56) Entgegenhaltungen:
**EP-A-0 053 743**
**DE-C-1 265 698**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Jäger, Horst, Dr., Carl- Rumpff- Strasse 37, D-5090 Leverkusen 1 (DE)**
Erfinder: **Langheinrich, Klaus, Dr., Im Birkelshof 8, D-5060 Bergisch- Gladbach 2 (DE)**
Erfinder: **Herd, Karl- Josef, Dr., Am Gartenfeld 66, D-5068 Odenthal (DE)**

EP 0 158 882 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft neue Triphendioxazin-Farbstoffe der Formel

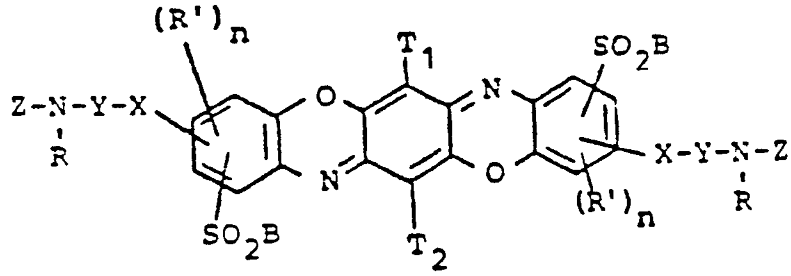

worin

B für $CH=CH_2$ oder $CH_2CHW$ steht, worin

W eine abspaltbare Gruppe wie $OSO_3H$, Cl, $S_2O_3H$, $OCOCH_3$, $OPO_3H_2$, $N^{\ominus}(CH_3)_3$ bedeutet,

R für H oder gegebenenfalls substituiertes $C_1$ -$C_4$ -Alkyl steht

Z H oder eine Reaktivgruppe bedeutet,

$T_1$ und $T_2$ für H, Cl, Br, $C_1$-$C_4$-Alkoxy, $C_1$-$C_4$-Alkyl, gegegebenenfalls substituiertes Phenyl oder Phenoxy stehen,

X für O, S oder

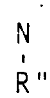

steht,

Y für einen gegebenenfalls weitersubstituierten zweiwertigen aliphatischen, araliphatischen, cycloaliphatischen oder aromatischen Rest steht, oder

X und Y zusammen für eine direkte Bindung oder

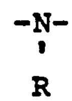

steht,

R' für Halogen, insbesondere Cl und Br, $SO_3H$, $C_1$-$C_4$-Alkyl, $C_1$-$C_4$-Alkoxy oder COOH steht,

R'' für Wasserstoff, oder gegebenenfalls substituiertes $C_1$-$C_4$-Alkyl steht und für den Fall, daß Y einen gegebenenfalls substituierten zweiwertigen aliphatischen Rest bedeutet, zusammen mit R auch für Alkylen, vorzugsweise -$CH_2CH_2$ - steht,

n 0 oder 1 bedeutet

und worin der Rest $SO_2B$ in ortho-Stellung zum Substituenten

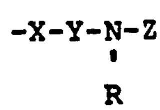

steht.

Der Substituent

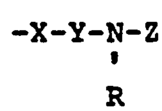

steht vorzugsweise in p-Stellung zum Ring-Stickstoff.

Bevorzugte Farbstoffe im Rahmen der Formel (1a) sind solche, bei denen -X-Y für eine direkte Bindung und ein Substituent Z für eine Reaktivgruppe und der endere Substituent Z für Wasserstoff steht.

Als Substituenten für R, gegebenenfalls substituiertes $C_1$-$C_4$-Alkyl kommen vorzugsweise in Frage: OH, $OCH_3$, COOH, $SO_3H$.

Beispiel für R sind: $CH_3$, $C_2H_5$, n-$C_3H_7$, i-$C_3H_7$, n-$C_4H_9$, die durch OH, $OCH_3$, COOH oder $SO_3H$ substituiert sein können. Substituenten der gegebenenfalls substituierten Phenyl- und Phenoxyreste $T_1$ bzw. $T_2$ sind z. B. Cl, $CH_3$, $C_2H_5$, $OCH_3$ und $OC_2H_5$.

Die Reste Y tragen, falls sie weitersubstituiert sind, vorzugsweise folgende weitere Substituenten: $SO_3H$, $OSO_3H$, COOH, $CH_3$, $OCH_3$, gegebenenfalls substituiertes Phenyl. Weiterhin können die araliphatischen, aliphatischen oder cycloaliphatischen Reste Y durch Heteroatome oder Heteroatomgruppen oder durch die Phenylgruppierung unterbrochen sein. Beispielhaft seien genannt: O, S, NH, $N(COCH_3)$.

a) Aromatische Reste Y sind beispielsweise folgende:

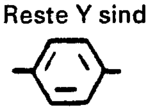 , 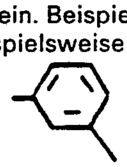 , 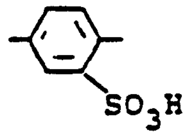 , 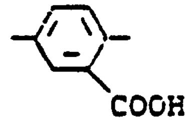 ,

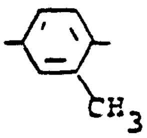 , 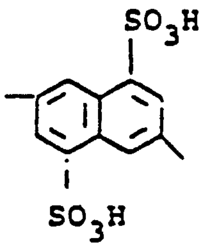 ,

b) Araliphatische Reste Y sind beispielsweise folgende:

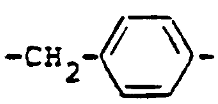 , 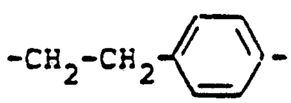 , 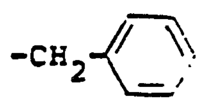 ,

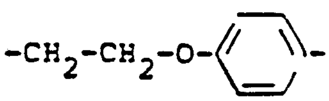

c) Aliphatische bzw. cycloaliphatische Reste Y sind beispielsweise folgende

$-(CH_2)_{2-6}$, $-CH_2-CH-CH_3$ , $-CH_2-CH-C_2H_5$ ,

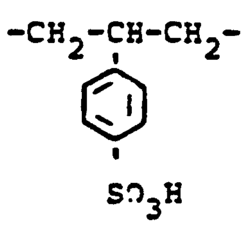 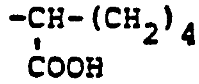 $-CH_2-CH_2-O-CH_2-CH_2-$

$-CH_2-CH_2-S-CH_2-CH_2-$,

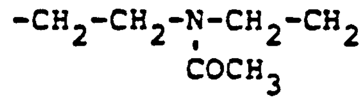

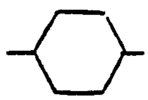,

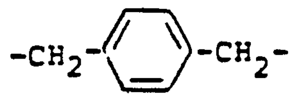,

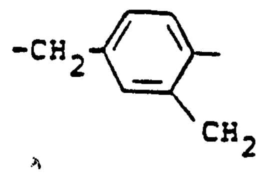

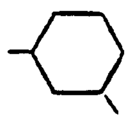,

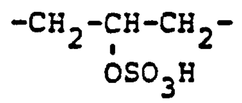

Ein geeigneter Rest

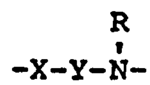

ist insbesondere auch

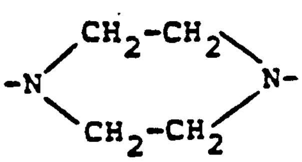

Für die erfindungsgemäßen Farbstoffe geeignete Reaktivgruppen Z sind insbesondere heterocyclische, welche mindestens einen abspaltbaren Substituenten an einen heterocyclischen Rest gebunden enthalten, sind unter anderem solche, die mindestens einen reaktiven Substituenten an einen 5- oder 6-gliedrigen heterocyclischen Ring gebunden enthalten, wie an einen Monazin-, Diazin-, Triazin- z. B. Pyridin-, Pyrimidin-, Pyridazin-, Pyrazin-, Thiazin-, Oxazin oder asymmetrischen oder symmetrischen Triazinring, oder an ein derartiges Ringsystem, welches einen oder mehrere ankondensierte aromatische Ringe aufweist, wie ein Chinolin-, Phthalazin-, Cinnolin-, Chinazolin-, Chinoxalin-, Acridin-, Phenazin- und Phenanthridin-Ring-System; die 5- oder 8-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen Halogen (Cl, Br oder F), Ammonium einschließlich Hydrazinium, Sulfonium, Sulfonyl, Azido($-N_3$), Rhodanido, Thio, Thiolether, Oxyether, Sulfinsäure und Sulfonsäure. Im einzelnen sind beispielsweise zu nennen:

Mono- oder Dihalogen-symmetrische-triazinylreste, z. B. 2,4-Dichlortriazinyl-6-, 2-Amino-4-chlortriazinyl-6-, 2-Alkylamino-4-chlortriazinyl-6-, wie 2-Methylamino-4-chlortriazinyl-6-, 2-Ethylamino- oder 3-Propylamino-4-

chlortriazinyl-6-, 2-β-Oxethylamino-4-chlortriazinyl-6-, 2-Di-β-oxethylamino-4-chlortriazinyl-6- und die entsprechenden Schwefelsäurehalbester, 2-Diethylamino-4-chlortriazinyl-6-, 2-Morpholino- oder 2-Piperidino-4-chlortriazinyl-6-, 2-Cyclohexylamino-4-chlortriazinyl-6-, 2-Arylamino- und substituiertes Arylamino-4-chlortriazinyl-6-, wie 2-Phenylamino-4-chlortriazinyl-6-, 2-(o-, m- oder p-Carboxy- oder Sulfophenyl)-amino-4-chlortriazinyl-6-, (2-Alkoxy-4-chlortriazinyl-6-), wie 2-Methoxy- oder Ethoxy-4-chlortriazinyl-6-, 2-(Phenylsulfonylmethoxy)-4-chlortriazinyl-6-, 2-Aryloxy und substituiertes Aryloxy-4-chlortriazinyl-6-, wie 2-Phenoxy-4-chlortriazinyl-6-, 2-(p-Sulfophenyl)-oxi-4-chlortriazinyl-6-, 2-(o-, m- oder p-Methyl- oder Methoxyphenyl)-oxi-4-chlortriazinyl-6-, 2-Alkylmercapto- oder 2-Arylmercapto- oder 2-(substituiertes Aryl)-mercapto-4-chlortriazinyl-6-, wie 2-β-Hydroxyethyl-mercapto-4-chlortriazinyl-6-, 2-Phenylmercapto-4-chlortriazinyl-6-, 3-(4'-Methyl-phenyl)-mercapto-4-chlortriazinyl-6-, 2-(2',4'-Dinitro)-Phenylmercapto-4-chlortriazinyl-6-, 2-Methyl-4-chlortriazinyl-6-, 2-Phenyl-4-chlortriazinyl-6-, 2,4-Difluortriazinyl-6-, Monofluortriazinylreste, die durch Amino-, Alkylamino-, Aralkylamino-, Acylaminogruppen substituiert sind, wobei Alkyl, insbesondere gegebenenfalls substituiertes $C_1$-$C_4$-Alkyl, Aralkyl, insbesondere gegebenenfalls substituiertes Phenyl-$C_1$-$C_4$-Alkyl und Aryl, insbesondere gegebenenfalls durch Sulfo-, Alkyl-, insbesondere $C_1$-$C_4$-Alkyl-, Alkoxy-, insbesondere $C_1$-$C_4$-Alkoxy, Carbonsäure-, Acylaminogruppen und Halogenatome wie Fluor, Chlor oder Brom substituiertes Phenyl oder Naphthyl bedeutet, beispielsweise 2-Amino-4-fluortriazinyl-6, 2-Methylamino-4-fluortriazinyl-6, 2-Ethyl-amino-4-fluortriazinyl-6, 2-iso-Propylamino-4-fluortriazinyl-6, 2-Dimethylamino-4-fluortriazinyl-6, 2-Diethylamino-4-fluortriazinyl-6, 2-β-Methoxy-ethylamino-4-fluortriazinyl-6, 2-β-Hydroxyethylamino-4-fluortriazinyl-6, 2-Di-(β-hydroxyethylamino)-4-fluortriazinyl-6-, 2-β-Sulfoethylamino-4-fluortriazinyl-6, 2-β-Sulfoethyl-methylamino-4-fluortriazinyl-6, 2-Carboxymethylamino-4-fluortriazinyl-6, 2-β-Cyanethylamino-4-fluortriazinyl-6, 2-Benzolamino-4-fluortriazinyl-6, 2-β-Phenylethylamino-4-fluortriazinyl-6, 2-Benzyl-methylamino-4-fluortriazinyl-6, 2-(x-Sulfobenzyl)-amino-4-fluortriazinyl-6, 2-Cyclohexylamino-4-fluortriazinyl-6, 2-(o-, m-, p-Methylphenyl)-amino-4-fluortriazinyl-6, 2-(o-, m-, p-Sulfophenyl)-amino-4-fluortriazinyl-6, -(2',5'-Disulfophenyl)-amino-4-fluortriazinyl-6, 2-(o-, m-, p-Chlorphenyl)-amino-4-fluortriazinyl-6, 2-(o-, m-, p-Methoxyphenyl)-4-fluortriazinyl-6, 2-(2'-Methyl-4'-sulfophenyl)-amino-4-fluortriazinyl-6, 2-(2'-Methyl-5'-sulfophenyl)-amino-4-fluortriazinyl-6, 2-(2'-Chlor-4'-sulfophenyl)-amino-4-fluortriazinyl-6, 2-(2'-Chlor-5'-sulfophenyl)-amino-4-fluortriazinyl-6, 2-(2'-Methoxy-4'-sulfophenyl)-amino-4-fluortriazinyl-6, 2-(o-, m-, p-Carboxyphenyl)-amino-4-fluortriazinyl-6, 2-(2',4'-Disulfophenyl)-amino-4-fluortriazinyl-6, 2-(3',5'-Disulfophenyl)-amino-4-fluortriazinyl-6, 2-(2'-Carboxy-4-sulfophenyl)-amino-4-fluortriazinyl-6, 2-(2'-Carboxy-4-sulfophenyl)-amino-4-fluortriazinyl-6, 2-(6'-Sulfonaphthyl-(2')-amino-4-fluortriazinyl-6, 2-(4' 8'-Disulfonaphthyl-(2'))-amino-4-fluortriazinyl-6, 2-(6',8'-Disulfonaphthyl-(2'))-amino-4-fluortriazinyl-6, 2-(N-Methylphenyl)-amino-4-fluortriazinyl-6, 2-(N-Ethylphenyl)-amino-4-fluortriazinyl-6, 2-(N-β-Hydroxyethylphenyl)-amino-4-fluortriazinyl-6, 2-(N-iso-Propylphenyl)-amino-4-fluortriazinyl-6, 2-Morpholino-4-fluortriazinyl-6, 2-Piperidino-4-fluortriazinyl-6, 2-(4',6',8'-Trisulfonaphthyl-(2'))-4-fluortriazinyl-6, 2-(3',6',8'-Trisulfonaphthyl-(2'))-4-fluortriazinyl-6, 2-(3',6'-Disulfonaphthyl-(1'))-4-fluortriazinyl-6, Mono-, Di- oder Trihalogenpyrimidinylreste, wie 2,4-Dichlorpyrimidinyl-6-, 2,4,5-Trichlorpyridmidinyl-6-, 2,4-Dichlor-5-nitro- oder -5-methyl- oder -5-carboxymethyl- oder -5-carboxy- oder -5-cyano oder -5-vinyl- oder -5-sulfo- oder -5-mono-, -di- oder -trichlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7-oder -6-sulfonyl- oder -carbonyl-, 2- oder 3- oder 4-(4',5'-Dichlorpyridazin-6'-yl-1')-phenylsulfonyl- oder -carbonyl-,β-(4',5'-Dichlorpyridazon-6'-yl-1')-ethyl-carbonyl-, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl- oder N-Ethyl-N-(2,4-dichlortriazinyl-6)-aminoacetyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidnyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pirimidinyl-, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl-, 6-Fluor-5-chlor-pyrimidinyl-4, 6-Fluor-5-trifluormethyl-pyrimidinyl-4, 6-Fluor-2-methyl-pyrimidinyl-4, 6-Fluor-5-chlor-2-methyl-pyrimidinyl-4,5,6-Difluor-pyrimidinyl-4, 6-Fluor-5-chlor-2-trifluor-methyl-pyrimidinyl-4, 6-Fluor-2-phenyl-pyrimidinyl-4, 6-Fluor-5-cyan-pyrimidinyl-4, 6-Fluor-5-nitro-pyrimidinyl-4, 6-Fluor-5-methyl-sulfonyl-pyrimidinyl-4, 6-Fluor-5-phenylsulfonyl-pyrimidinyl-4, sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl)-triazinyl-6; sulfonylgruppenhaltige Pyrimidinringen, wie 2-Carboxymethyl-sulfonyl-pyrimidinyl-4-, 2-Methylsulfonyl-6-methyl-pyrimidinyl-4-, 2-Methylsulfonyl-6-ethyl-pyrimidinyl-4-, 2-Phenylsulfonyl-5-chlor-6-methyl-pyrimidinyl-, 2,6-Bis-methylsulfonyl-pyrimidinyl-4-, 2,6-Bis-methyl-sulfonyl-5-chlor-pyrimidinyl-4-, 2,4-Bis-methylsulfonyl-pyrimidin-5-sulfonyl-, 2-Methylsulfonyl-pyrimidinyl-4, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methyl-sulfonyl-5-chlor-6-chlormethyl-pyrimidinyl-4-, 2-Methyl-sulfonyl-4-chlor-6-methylpyrimidin-5-sulfonyl-, 2-Methylsulfonyl-5-nitro-6-methyl-pyrimidinyl-4-, 2,5,6-Tris-methylsulfonyl-pyrimidinyl-4-, 2-Methylsulfonyl-,5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carbonyl-pyrimidinyl-4-, 2-Methylsulfonyl-5-sulfo-pyrimidinyl-4-, 2-Methylsulfonyl-6-carbo-methoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlorpyrimidinyl-4-, 2-Sulfoethylsulfonyl-6-methylpyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methylpyrimidinyl-4-, 2-Methylsulfonyl-6-chlorpyrimidin-4- und -5-carbonyl-, 2,6-Bis-(methyl-sulfonyl)-pyrimidin-4- oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methyl-pyrimidin-5-sulfonyl- oder -carbonyl-, ammoniumgruppenhaltige Triazinringe, wie Trimethylammonium-4-phenylamino- oder -4-(o-, m- oder p-sulfophenyl)-aminotriazinyl-6-, 2-(1,1-Dimethylhydrazinium)-4-phenylamino- oder -4-(o-, m- oder p-sulfophenyl)-aminotriazinyl-6-, 2-(2-Isopropyliden-1,1-dimethyl)-hydrazinium-4-phenylamino- oder -4-(o-, moder p-sulfophenyl)-aminotriazinyl-6-, 2-N-Aminopyrrolidinium- oder 2-Aminopiperidinium-4-phenylamino- oder -4-(o-, m- oder p-sulfophenyl)-aminotriazinyl-6-, 2-N-Aminopyrrolidinium- oder 2-N-Aminopiperidinium-4-phenylamino- oder -4-(o-, m- oder p-Sulfophenyl)-aminotriazinyl-6-, ferner 4-Phenylamino- oder -4-(sulfophenylamino)-triazinyl-6-Reste, die in 2-Stellung über eine Stickstoffbindung das 1,4-Bis-azabicyclo-[2,2,2]-octan oder das 1,2-Bis-aza-bicyclo-[0,3,3]-octan quartär gebunden enthalten, 2-Pyridinium-4-phenylamino- oder 4-(o-, m- oder p-Sulfophenyl)-aminotriazinyl-6- sowie entsprechende 2-Oniumtriazinyl-6-Reste, die in 4-Stellung durch Alkylamino-, wie Methylamino-, Ethylamino- oder β-Hydroxyethylamino- oder Alkoxy-, wie Methoxy- oder Ethoxy-, oder Aroxy-, wie Phenoxy- oder Sulfophenoxy-Gruppen substituiert sind: 2-Chlorbenzthiazol-5- oder -6-carbonyl- oder -5- oder -6-sulfonyl-, 2-Arylsulfonyl- oder -Alkylsulfonylbenzthiazol-5- oder -6-carbonyl- oder -5- oder -6-sulfonyl-, wie 2-Methyl-sulfonyl- oder 2-Ethoxysulfonylbenzthiazol-5- oder 6-sulfonyl- oder -carbonyl-, 2-Phenylsulfonyl-benzthiazol-5- oder -6-sulfonyl- oder -carbonyl- und die entsprechenden im ankondensierten Benzolring Sulfogruppen enthaltenden 2-Sulfonylbenzthiazol-5- oder 6-carbonyl- oder -sulfonyl-Derivate, 2-Chlorbenzoxanol-5- oder -6-carbonyl- oder -sulfonyl-, 2-Chlorbenzimidazol-5- oder -6-carbonyl- oder sulfonyl-, 2-Chlor-1-methylbenzimidazol-5- oder 6-carbonyl- oder sulfonyl-, 2-Chlor-4-methylthiazol-(1,3)-5-carbonyl- oder -4- oder -5-sulfonyl-, N-Oxid des 4-Chlor- oder 4-Nitrochinolin-5-carbonyl oder auch die Reste 5-Chlor-2,6-difluor-1,3-dicyanphenyl, 2,4-Difluor-1,3,5-tricyanphenyl, 2,4,5-Trifluor-1,3-dicyan-phenyl, 2,4-Dichlor-5-methylsulfonyl-pyrimidinyl-6, 2,4-Trichlor-5-ethylsulfonyl-pyrimidinyl-6, 2-Fluor-5-methylsulfonyl-6'-(2'-sulfophenylamino)-pyrimidinyl-4, 2,5-Dichlor-6-methylsulfonyl-pyrimidinyl-4.

Des weiteren sind Reaktivgruppen der aliphatischen Reihe zu nennen, wie Acrylolyl-, Mono-, Di- oder Trichloracryloyl-, wie $-CO-CH=CH-Cl$, $-CO-CCl=CH_2$, $-CO-CCl=CH-CH_3$, ferner $-CO-CCl=CH-COOH$, $-CO-CH=CCl-COOH$, β-Chlorpropionyl-, 3-Phenylsulfonylpropionyl-, 3-Methylsulfonylpropionyl-, 2-Fluor-2-chlor-3,3-difluorcyclobutan-1-carbonyl-, 2,2,3,3-Tetrafluorcyclobutan-carbonyl-1- oder -sulfonyl-1-, β-(2,2,3,3-Tetrafluorcyclobutyl-1)-aryloxy-, α- oder β-Bromacrylolyl-, α- oder β-Alkyl- oder Arylsulfoacrylolyl-Gruppe, wie α- oder β-Methylsulfonylacrylolyl, Chloracetyl.

In Formel (1a) haben folgende Gruppierungen eine bevorzugte Bedeutung:

$T_1$ und $T_2$ = Cl,

$$X = \underset{\substack{| \\ H}}{N}$$

Y = aliphatischer, aromatischer oder araliphatischer Rest

Z = Rest der Monofluor- oder Monochlortriazinreihe, insbesondere der Monofluortriazinreihe

B = $CH_2CH_2OSO_3H$.

Im Rahmen der Formel (1a) sind folgende Farbstoffe bevorzugt:

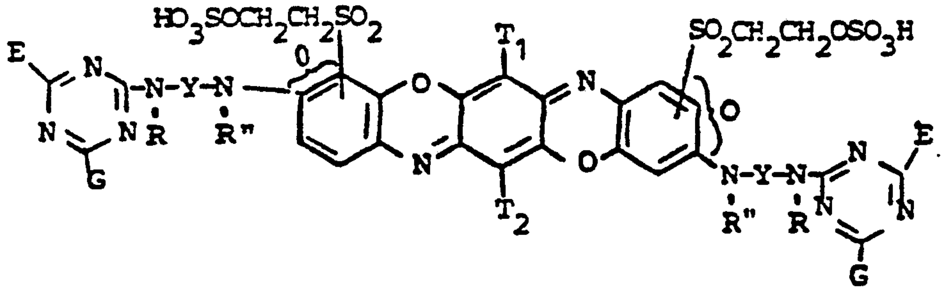

(2)

worin Y, R, R", $T_1$ und $T_2$ die oben angegebene Bedeutung haben
G = F oder Cl
E = eine gegebenenfalls substituierte Aminogruppe

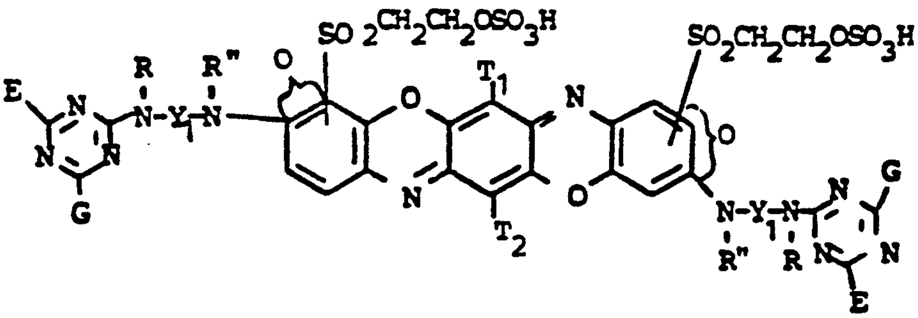

(3)

worin R, R", E und G die oben angegebene Bedeutung haben, $Y_1$ = zweiwertiger aliphatischer Rest-

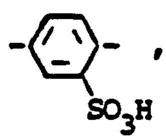 , 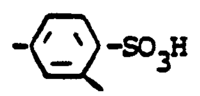

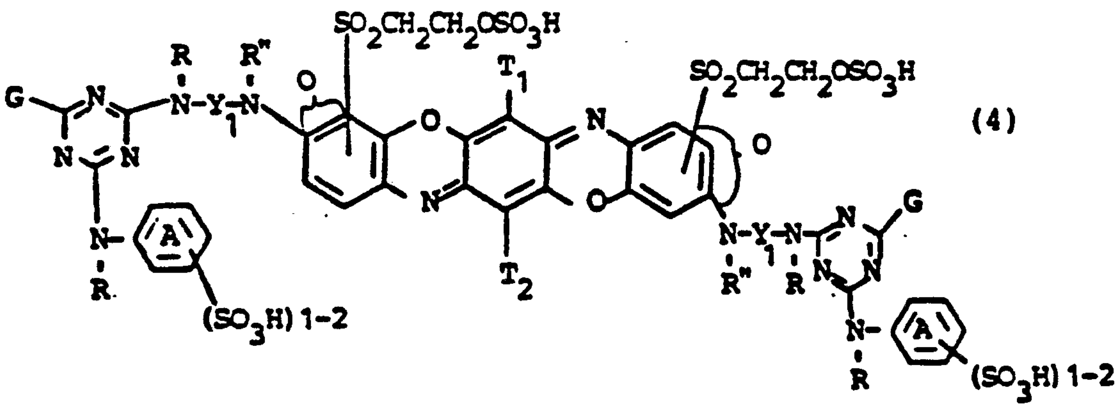

(4)

worin R, R", $Y_1$ und G die oben angegebene Bedeutung haben und der Benzolkern A noch weitere Substituenten enthalten kann. Als solche seien erwähnt: Cl, $CH_3$, $CH_3O$ und COOH

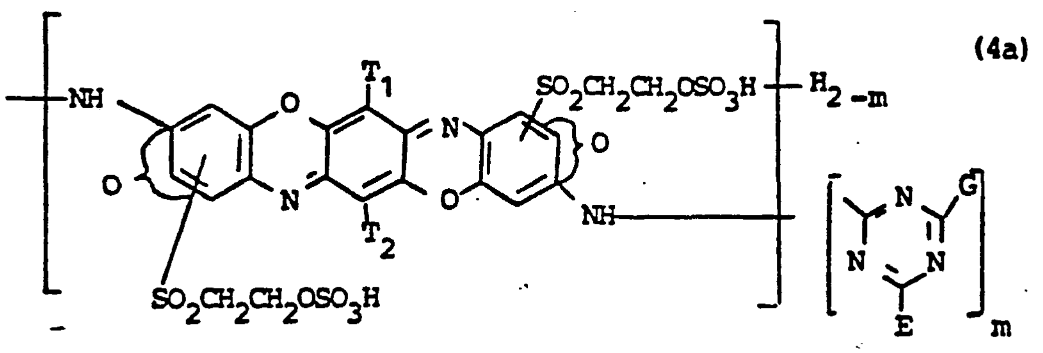

(4a)

worin m = 1 oder 2.

Weiterhin bevorzugt sind Farbstoffe der Formel (2), (3) und (4), worin

R, R″ = H

und die übrigen Substituenten die oben angegebene Bedeutung besitzen.

Außerdem bevorzugt sind Farbstoffe der Formel (3), (4) und (4a), worin

$Y_1$ = $CH_2$-$CH_2$, $CH_2$-$CH_2$-$CH_2$, $CH_2$-$CH_2$-$CH_2$-$CH_2$ oder

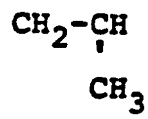

und

G = F

und die übrigen Substituenten die oben angegebene Bedeutung haben.

Ganz generell stehen $T_1$ und $T_2$ bevorzugt für Cl.

Gegenstand der Erfindung ist weiterhin ein Verfahren zur Herstellung der Reaktivfarbstoffe der Formel (1), das dadurch gekennzeichnet ist, daß man 1 Mol eines Triphendioaxzinfarbstoffs der Formel

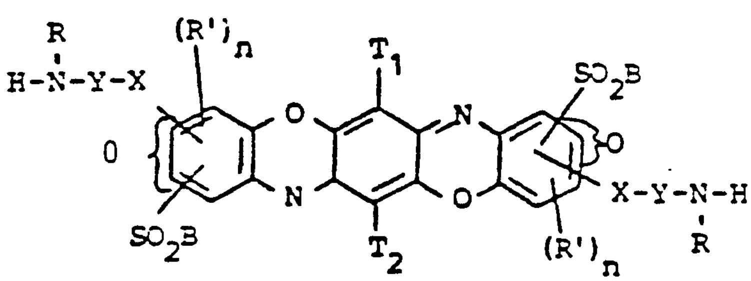

(5a)

mit 1-2 Mol einer Reaktivkomponente der Formel

U - Z - (6)

worin U einen als Anion abspalthbahren Sutstituenten (vorzugweise Halogen) darstellt, unter Abspaltung von U-H, kondensiert. Diese Acylierung wird im allgemeinen in Wesser bei Temperaturen von 0° bis 80°C - je nach Reaktivität von(6)- und im schwachalkalischen, neutralen bis schwach saurem Medium durchgeführt.

Geeignete Reaktivkomponenten der Forme (6) sind beispielsweise die Halogenide, insbesondere die Chloride der genannten Komponenten Z. Aus der großen Zahl der zur Vefügung stehenden Verbindungen seien

hier auszugsweise erwähnt:

Trihalogen-symmetrische-triazine, wie Cyanurchlorid und Cyanurbromid, Dihalogen-monoamino- und monosubstituierte Aminosymmetrische Triazine, wie 2,6-Dichlor-4-aminotriazin, 2,6-Dichlor-4-methylaminotriazin, 2,6-Dichlor-4-ethylaminotriazin, 2,6-Dichlor-4-oxethylaminotriazin, 2,6-Dichlor-4-phenylaminotriazin, 2,6-Dichlor-4-(o-, m- oder p-sulfophenyl)-aminotriazin, 2,6-Dichlor-4-(2',3'-, 2',4'-, 3',4'- oder -3'-disulfophenyl)-aminotriazin, Dihalogen-alkoxy- und aryloxy-sym. triazine, wie 2,6-Dichlor-4-methoxytriazin, 2,6-Dichlor-4-ethoxytriazin, 2,6-Dichlor-4-phenoxytriazin, 2,6-Dichlor-4-(o-, m- oder p-sulfophenyl)-oxitriazin, Dihalogen-alkylmercapto- und -arylmercapto sym. triazine, wie 2,6-Dichlor-4-ethylmercapto-triazin, 2,6-Dichlor-4-phenylmercaptotriazin, 2,6-Dichlor-4-(p-methylphenyl)-mercaptotriazin, 2,4,6-Trifluortriazin, 2,4-Difluor-6-(o-, m-, p-methyl-phenyl)-amino-triazin, 2,4-Difluor-6-(o-, m-, p-sulfophenyl)-amino-triazin, 2,4-Difluor-6-methoxytriazin, 2,4-Difluor-6-(2',5'-disulfophenyl)-amino-triazin, 2,4-Difluor-6-(6'-sulfonaphthyl-2')-amino-triazin, 2,4-Difluor-6-(o-, m-, p-ethylphenyl)-amino-triazin, 2,4-Difluor-6-(o-, m-, p-chlorphenyl)-amino-triazin, 2,4-Difluor-6-(o-, m-, p-methoxyphenyl)-amino-triazin, 2,4-Difluor-6-(2'-methyl-5'-sulfophenyl)-amino-triazin, 2,4-Difluor-6-(2'-methyl-4'-sulfophenyl)-amino-triazin, 2,4-Difuor-6-(2'-chlor-4'-sulfophenyl)-amino-triazin, 2,4-Difluor-6-(2'-methoxy-4'-sulfophenyl)-amino-triazin, 2,4-Difluor-6-(o-, m-, p-carboxyphenyl)-amino-triazin, 2,4-Difluor-6-(N-methyl-phenyl)-amino-triazin, 2,4-Difluor-6-(N-ethyl-phenyl)-amino-triazin, 2,4-Difluor-6-(N-isopropyl-phenyl)-amino-triazin, 2,4-Difluor-6-cyclohexylamino-triazin, 2,4-Difluor-6-morpholino-triazin, 2,4-Difluor-6-piperidino-triazin, 2,4-Difluor-6-benzylamino-triazin, 2,4-Difluor-6-N-methyl-benzyl-amino-triazin, 2,4-Difluor-6-β-phenylethyl-amino-triazin, 2,4-Difluor-6-(X-sulfo-benzyl)-amino-triazin, 2,4-Difluor-6-(2',4'-disulfophenyl)-amino-triazin, 2,4-Difluor-6-(3',5'-disulfophenyl)-amino-triazin, 2,4-Difluor-6-(2'-carboxy-4'-sulfophenyl)-amino-triazin, 2,4-Difluor-6-(2',5'-disulfo-4-methoxyphenyl)-amino-triazin, 2,4-Difluor-(2'-methyl-4',6'-disulfophenyl)-amino-triazin, 2,4-Difluor-(6',8'-disulfonaphthyl-(2')-amino-triazin, 2,4-Difluor-(4',8'-disulfonaphthyl-(2'))-amino-triazin, 2,4-Difluor-4',6',8'-trisulfonaphthyl-(2'))-amino-triazin, 2,4-Difluor-(3',6',8'-trisulfonaphthyl-(2'))-amino-triazin, 2,4-Difluor-(3',6'-disulfonaphthyl-(1'))-amino-triazin, 2,4-Difluor-6-amino-triazin, 2,4-Difluor-6-methylamino-triazin, 2,4-Difluor-6-ethylamino-triazin, 2,4-Difluor-6-methoxyethoxy-triazin, 2,4-Difluor-6-methoxyethylamino-triazin, 2,4-Difluor-6-dimethylamino-triazin, 2,4-Difluor-6-diethylamino-triazin, 2,4-Difluor-6-iso-propylamino-triazin, Tetrahalogenpyrimidine, wie Tetrachlor-, Tetrabrom- oder Tetrafluorpyrimidin, 2,4,6-Trihlaogenpyrimidine, wie 2,4,6-Trichlor-, Tribrom- oder Trifluor-pyrimidin, Dihalogenpyrimidine, wie 2,4-Dichlor-, -Dibrom- oder -Difluorpyrimidin; 2,4,6-Trichlor-5-nitro- oder -5-methyl- oder -5-carbomethoxy- oder -5-carboethoxy- oder -5-carboxymethyl- oder -5-mono-, -di- oder -trichlormethyl- oder -5-carboxy- oder -5-sulfo- oder -5-cyano- oder -5-vinyl-pyrimidin, 2,4-Difluor-6-methylpyrimidin, 2,6-Difluor-4-methyl-5-chlorpyrimidin, 2,4-Difluorpyrimidin-5-ethylsulfon, 2,6-Difluor-4-chlorpyrimidin, 2,4,6-Trifluor-5-chlorpyrimidin, 2,6-Difluor-4-methyl-5-brom-pyrimidin, 2,4-Difluor-5,6-dichlor- oder -dibrompyrimidin, 4,6-Difluor-2,5-dichlor- oder -dibrompyrimidin, 2,6-Difluor-4-brompyrimidin, 2,4,6-Trifluor-5-brompyrimidin, 2,4,6-Trifluor-5-chlormethylpyrimidin, 2,4,6-Trifluor-5-nitropyrimidin, 2,4,6-Trifluor-5-cyanpyrimidin, 2,4,6-Trifluorpyrimidin-5-carbonsäurealkylester oder -5-carbonsäureamide, 2,6-Difluor-5-methyl-4-chlorpyrimidin, 2,6-Difluor-5-chlorpyrimidin, 2,4,6-Trifluor-5-methylpyrimidin, 2,4,5-Trichlor-6-methylpyrimidin, 2,4-Difluor-5-nitro-6-chlorpyrimidin, 2,4-Difluor-5-cyanpyrimidin, 2,4-Difluor-5-methylpyrimidin, 6-Trifluormethyl-5-chlor-2,4-difluorpyrimidin, 6-Phenyl-2,4-difluorpyrimidin, 6-Trifluormethyl-2,4-difluorpyrimidin, 5-Trifluormethyl-2,4,6-trifluorpyrimidin, 2,4-Difluor-5-nitro-pyrimidin, 2,4-Difluor-5-trifluormethylpyrimidin, 2,4-Difluor-5-methylsulfonyl-pyrimidin, 2,4-Difluor-5-phenyl-pyrimidin, 2,4-Difluor-5-carbonamido-pyrimidin, 2,4-Difluor-5-carbomethyl-pyrimidin, 2,4-Difluor-6-trifluormethylpyrimidin, 2,4-Difluor-6-carbonamido-pyrimidin, 2,4-Difluor-6-carbomethoxy-pyrimidin, 2,4-Difluor-6-phenyl-pyrimidin, 2,4-Difluor-6-cyanpyrimidin, 2,4,6-Trifluor-5-methylsulfonylpyrimidin, 2,4-Difluor-5-sulfonamido-pyrimidin, 2,4-Difluor-5-chlor-6-carbomethoxy-pyrimidin, 5-Trifluormethyl-2,4-difluor-pyrimidin 4,6-Difluor-5-chlor-pyrimidin, 44,6-Difluor-5-trifluormethyl-pyrimidin, 4,6-Difluor-2-methyl-pyrimidin, 4,6-Difluor-6-chlor-2-methyl-pyrimidin, 4,5,6-Trifluor-pyrimidin, 4,6-Difluor-5-chlor-2-trifluormethyl-pyrimidin, 4,6-Difluor-2-phenyl-pyrimidin, 4,6-Difluor-5-cyan-pyrimidin, 4,6-Difluor-5-nitro-pyrimidin, 4,6-Difluor-5-methylsulfonyl-pyrimidin, 4,6-Difluor-5-phenylsulfonyl-pyrimidin, 2,4-Dichlorpyrimidin-5-carbonsäurechlorid, 2,4,6-Trichlorpyrimidin-5-carbonsäurechlorid, 2-Methyl-4-chlorpyrimidin-5-carbonsäurechlorid, 2-Chlor-4-methylpyrimidin-5-carbonsäurechlorid, 2,6-Dichlorpyrimidin-4-carbonsäurechlorid; Pyrimidin-Reaktivkomponenten mit abspaltbaren Sulfonylgruppen, wie 2-Carboxymethylsulfonyl-4-chlorpyrimidin, 2-Methylsulfonyl-4-chlor-6-methylpyrimidin, 2,4-Bis-methylsulfonyl-6-methylpyrimidin, 2,4-Bis-phenylsulfonyl-5-chlor-6-methylpyrimidin, 2,4,6-Trismethylsulfonyl-pyrimidin, 2,6-Bis-methylsulfonyl-4,6-dichlorpyrimidin, 2,4-Bis-methylsulfonylpyrimidin-5-sulfonsäurechlorid, 2-Methylsulfonyl-4-chlorpyrimidin, 2-Phenylsulfonyl-4-chlorpyrimidin, 2,4-Bis-trichlormethylsulfonyl-6-methylpyrimidin, 2,4-Bis-methylsulfonyl-5-chlor-6-methylpyrimidin, 2,4-Bis-methylsulfonyl-5-brom-6-methylpyrimidin, 2-Methylsulfonyl-4,5-dichlor-6-methyl-pyrimidin, 2-Methylsulfonyl-4,5-dichlor-6-chlor-methylpyrimidin, 2-Methylsulfonyl-4-chlor-6-methyl-pyrimidin-5-sulfonsäurechlorid, 2-Methylsulfonyl-5-chlor-5-nitro-6-methylpyrimidin, 2,4,5,6-Tetramethyl-sulfonyl-pyrimidin, 2-Methylsulfonyl-4-chlor-5,6-dimethylpyrimidin, 2-Ethylsulfonyl-4,6-dichlor-6-methylpyrimidin, 2-Methylsulfonyl-4,6-dichlorpyrimidin, 2,4,6-Tris-methyl-sulfonyl-5-chlor-pyrimidin, 2-Methyl-sulfonyl-4-chlor-6-carboxypyrimidin, 2-Methylsulfonyl-4-chlorpyrimidin-5-sulfonsäure, 2-Methylsulfonyl-4-chlor-6-carbomethoxypyrimidin, 2-Methylsulfonyl-4-chlor-pyrimidin-5-carbonsäure, 2-Methlylsulfonyl-4-chlor-5-cyan-methoxypyrimidin, 2-Methylsulfonyl-4,5-dichlorpyrimidin, 4,6-Bis-methylsulfonyl-pyrimidin, 4-Methylsulfonyl-6-chlorpyrimidin, 2-Sulfoethylsulfonyl-4-chlor-6-methylpyrimidin, 2-Methylsulfonyl-4-chlor-5-brompyrimidin, 2-Methylsulfonyl-4-chlor-5-brom-6-methylpyrimidin, 2,4-Bis-methylsulfonyl-5-chlor-pyrimidin,

2-Phenylsulfonyl-4,5-dichlorpyrimidin, 2-Phenylsulfonyl-4,5-dichlor-6-methylpyrimidin, 2-Carboxymethylsulfonyl-4,5-dichlor-6-methylpyrimidin, 2-(2'- oder 3'- oder 4'-Carboxyphenylsulfonyl)-4,5-dichlor-6-methylpyrimidin, 2,4-bis-(2'- oder 3'- oder 4'-Carboxyphenylsulfonyl)-5-chlor-6-methylpyrimidin, 2-Methylsulfonyl-6-chlorpyrimidin-4- oder -5-carbonsäurechlorid, 2-Ethylsulfonyl-6-chlorpyrimidin-4- oder -5-carbonsäurechlorid, 2,6-Bis-(methylsulfonyl)-pyrimidin-4-carbonsäurechlorid, 2-Methylsulfonyl-6-methyl-4-chlor- oder -4-brompyrimidin-5-carbonsäurechlorid oder -bromid, 2,6-Bis-(methylsulfonyl)-4-chlorpyrimidin-5-carbonsäurechlorid; weitere Reaktivkomponente der heterocyclischen Reihe mit reaktiven Sulfonylsubstituenten sind beispielsweise 3,6-Bis-phenylsulfonylpyridazin, 3-Methylsulfonyl-6-chloridazin, 3,6-Bis-trichlormethylsulfonylpyridazin, 3,6-Bis-methylsulfonyl-4-methylpyridazin, 2,5,6-Trismethylsulfonylpyridazin, 2,4-Bis-methylsulfonyl-1,3,5-triazin, 2,4-Bis-methylsulfonyl-6-(3'-sulfonyl-amino)-1,3,5-triazin, 2,4-Bis-methylsulfonyl-6-N-methylanilino-1,3,5-triazin, 2,4-Bis-methylsulfonyl-6-phenoxy-1,3,5-triazin, 2,4-Bis-methylsulfonyl-6-trichlorethoxy-1,3,5-triazin, 2,4,6-Tris-phenylsulfonyl-1,3,5-triazin; 2,4-Bis-methylsulfonylchinazolin, 2,4-Bis-trichlormethylsulfonylchinolin, 2,4-Bis-carboxymethylsulfonylchinolin, 2,6-Bis-(methylsulfonyl)-pyridin-4-carbonsäurechlorid und 1-(4'-Chlor-carbonylphenyl) oder 2'-chlorcarbonylethyl)-4,5-bis-methylsulfonyl-pyridazon-(6); weitere heterocyclische Reaktivkomponenten mit beweglichem Halogen sind unter anderem 2- oder 3-Monochlorchinoxalin-6-carbonsäurechlorid oder -6-sulfonsäurechlorid, 2- oder 3-Monobromchinoxalin-6-carbonsäurebromid oder -6-sulfonsäurebromid, 2,4-Dichlorchinoxalin-6-carbonsäurechlorid oder -6-sulfonsäurechlorid, 2,3-Dibromchinoxalin-6-carbonsäurebromid oder -6-sulfonsäurebromid, 1,4-Dichlorphthalazin-6-carbonsäurechlorid oder -6-sulfonsäurechlorid sowie die entsprechenden Bromverbindungen, 2,4-Dichlorchinazolin-6- oder -7-carbonsäurechlorid oder -7-sulfonsäurechlorid sowie die entsprechenden Bromverbindungen, 2- oder 3- oder 4-(4'-, 5'-Dichlorpyridazin-6'-yl-1')-phenylsulfonsäurechlorid oder -carbonsäurechlorid sowie die entsprechenden Bromverbindungen, β-(4',5'-Dichlorpyridazin-6'-yl-1')-Ethylcarbonsäurechlorid, 2-Chlorchinoxalin-3-carbonsäurechlorid und die entsprechende Bromverbindung, N-Methyl-N-(2,4-dichlortriazin-6)-carbamidsäurechlorid, N-Methyl-N-(2-chlor-4-methylamino-triazinyl-6)-carbamidsäurechlorid, N-Methyl-N-(2-chlor-4-dimethylamino-triazinyl-6)-carbamidsäurechlorid, N-Methyl- oder N-Ethyl-N-(2,4-dichlortriazinyl-6)-aminoacetyl-chlorid, N-Methyl-, N-Ethyl- oder N-Hydroxyethyl-N-(2,3-dichlorchinoxalin-6-sulfonyl)- oder -6-carbonyl)-aminoacetylchlorid und die entsprechenden Bromderivate, ferner 2-Chlorbenzthiazol-5- oder -6-carbonsäurechlorid oder -5- oder -6-sulfonsäurechlorid und die entsprechenden Bromverbindungen, 2-Arylsulfonyl- oder 2-Alkylsulfonyl-benzthiazol-5- oder -6-carbonsäurechlorid oder -5- oder -6-sulfonsäurechlorid, wie 2-Methylsulfonyl- oder 2-Ethyl-sulfonyl- oder 2-Phenylsulfonyl-benzthiazol-5- oder -6-sulfonsäurechlorid oder -5- oder -6-carbonsäurechlorid sowie die entsprechenden in ankondensierten Benzolring Sulfonsäuregruppen enthaltenden 2-Sulfonylbenzthiazol-Derivate, 3,5-Bis-methyl-sulfonyl-isothiazol-4-carbonsäurechlorid, 2-Chlor-benzoxazol-5- oder -6-carbonsäurechlorid oder -sulfonsäurechlorid sowie die entsprechenden Bromderivate, 2-Chlor-benzimidazol-5- oder -6-carbonsurechlorid oder -sulfonsäurechlorid sowie die entsprechenden Bromderivate, 2-Chlor-1-methylbenzimidazol-5- oder -6-carbonsäurechlorid oder -sulfonsäurechlorid sowie die entsprechenden Bromderivate 2-Chlor-4-methylthiazol-(1,3)-5-carbonsäurechlorid oder -4- oder -5-sulfonsäurechlorid, 2-Chlor-thiazol-4- oder -5-sulfonsäurechlorid und die entsprechenden Bromderivate. Weiterhin seien genannt: 5-Chlor-2,4,6-trifluor-isophthalonitril, 2,4,6-Trifluor-1,3,5-tricyanobenzol, 2,4,5,6-Tetrafluorisophthalonitril, 2,4,6-Trichlor-5-methylsulfonylpyrimidin, 2,4,6-Trichlor-5-ethylsulfonyl-pyrimidin, 2,4-Difluor-5-methylsulfonyl-6-(2'-sulfophenylamino)-pyrimidin.

Aus der Reihe der aliphatischen Reaktivkomponenten sind beispielsweise zu erwähnen:

Acrylsäurechlorid, Mono-, Di- oder Trichlor-acrylsäurechlorid, 3-Chlorpropionsäurechlorid, 3-phenylsulfonylpropionsäurechlorid, 3-Methylsulfonyl-propionsäurechlorid, 3-Ethylsulfonylpropionsäurechlorid, 3-Chlorethansulfochlorid, Chlormethansulfochlorid, 2-Chloracetylchlorid, 2,2,3,3-Tetrafluorcyclobutan-1-carbonsäurechlorid, β-(2,2,3,3-Tetrafluorcyclobutyl-1)-acrylsäurechlorid, β-(2,2,3,3-Trifluor-2-chlorcyclobutan-1)-carbonsäurechlorid, β-Methyl-sulfonyl-acrylsäurechlorid, β-Methylsulfonyl-acrylsäurebromid und β-Bromacrylsäurechlorid und β-Bromacrylsäurebromid.

Bei der Herstellung der bevorzugten Farbstoffe der Formel (2) bzw. (3) bzw. (4) ergibt sich eine weitere Variante dadurch, daß man den entsprechenden Farbstoff der Formel (5) mit einem Triazin der Formel

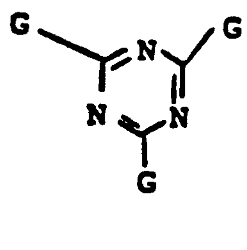

(7)

und mit einem Amin der Formel

H - E (8)

in beliebiger Reihenfolge kondensieren kann.

So kann man

a) 1 Mol eines Farbstoffs der Formel (5) mit 2 Mol eines Triazins der Formel (6) kondensieren und dann das

Bisacylierungsprodukt mit 2 Mol eines Amins der Formel (8) umsetzen.

b) 2 Mol eines Triazins der Formel (7) und 2 Mol eines Amins der Formel (8) kondensieren und das primäre Kondensationsprodukt mit 1 Mol eines Farbstoffs der Formel (5) umsetzen.

Die Farbstoffe (4a) stellt man bevorzugt nach folgenden Verfahren her:

Die entsprechenden Farbstoffe der Formel (5) werden zunächst mit 1 Mol eines Triazins (7) kondensiert und anschließend mit einem 1 Mol Amin (8) umgesetzt.

Die Farbstoffe der Formel (5) bzw. (5a) können nach bekannten Methoden hergestellt werden.

Man erhält sie aus den Dianiliden der Formel

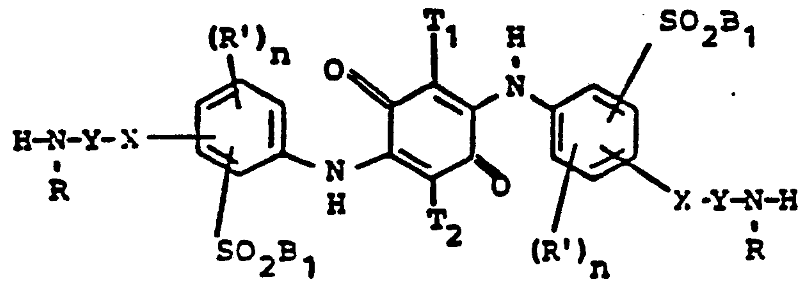

(9)

worin $B_1$ = B oder $CH_2CH_2OH$ durch Ringschluß mit einem sauren Kondensationsmittel. Als solches kommt beispielsweise in Frage:

a) Oleum, wie es in den Beispielen 1, 123 und 124 der Deutschen Offenlegungsschrift 2 302 382, in den Beispielen 1, 4, 126, 183 und 184 der Deutschen Offenlegungsschrift 2 503 611, im Beispiel 1 der UK Patent Applikation 2 059 985 und in den Beispielen 1, 114, 235, 282 und 365 der Deutschen Offenlegungsschrift 2 823 828 beschrieben ist.

b) Oleum und stöchiometrische Mengen Persulfat, wie es in der Britischen patentschrift 1 589 915 oder im Beispiel 125 der Deutschen Offenlegungsschrift 2 823 828 beschrieben ist.

c) Oleum in Gegenwart von katalytischen Mengen Jod, wobei man mit 10-50 %igem Oleum und bei 0 - 40°C den Ringschluß bewirkt.

Besonders bevorzugt ist die Herstellung der Farbstoffe (5), in denen B = $CH_2CH_2OSO_3H$ nach Verfahren a, b und c aus Verbindungen der Formel (9), worin $B_1$ = $CH_2CH_2OH$.

Beim Ringschluß nach a, b und c können aliphatische Hydroxyl-Gruppen sulfatiert und aromatische Ringe sulfiert werden.

Die Dianilide der Formel (9) können nach Verfahren erhalten werden, wie sie im Beispiel 1 der Deutschen Offenlegungsschrift 2 503 611 und insbesondere in den Beispielen 1, 114, 125, 235, 282, 317, 339 und 365 der Deutschen Offenlegungsschrift 2 823 828 beschrieben sind.

Beispielsweise können Verbindungen der Formel (9) dadurch erhalten werden, daß man Chinone der Formel

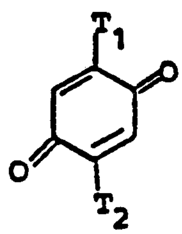

(10)

mit 2 Mol eines Diamins der Formel

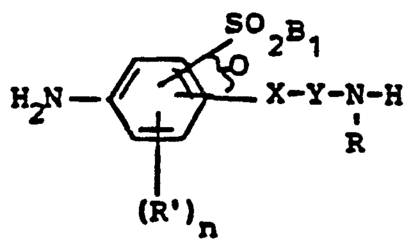

(11)

worin $T_1$,$T_2$, R' X, Y, $B_1$ und n die angegebene Bedeutung haben, umsetzt.

Bei der Durchführung der Reaktion zwischen dem Chinon (10) und dem Diamin (11) wird es oftmals bevorzugt, einen Überschuß des Chinons (10) über diejenige Menge zu verwenden, die für die Reaktion nötig ist. Beispielsweise können bis zu ungefähr 3 Mol Chinon dem Reaktionsgemisch zugegeben werden.

Diese Reaktion hat sich besonders geeignet erwiesen für Produkte in denen $T_1$ und $T_2$ für H oder $C_{1-4}$-Alkyl, das gegebenenfalls durch OH oder $C_{1-4}$-Alkoxy substituiert ist, stehen.

Beispiele für Chinone der Formel (10) sind:

1,4-Benzochinon, 2-Methyl-1,4-benzochinon, 2-Ethyl-1,4-benzochinon, 2-n-Propyl-1,4-benzochinon, 2-Isopropyl-1,4-benzochinon, 2,2'-Ethoxyethyl-1,4-benzochinon, 2-Phenyl-1,4-benzochinon, 2-(4'-Methylphenyl)-1,4-benzochinon, 2-(4'-Methoxyphenyl)-1,4-benzochinon, 2-(3'-Chlorophenyl)-1,4-benzochinon, 2,5-Dimethyl-1,4-benzochinon, 2-Methyl-5-ethyl-1,4-benzochinon, 2-Methyl-5-cyclohexyl-1,4-benzochinon, 2-Cyclohexyl-1,4-benzochinon, 2,5-Dibenzyl-1,4-benzochinon, 2,5-Dicyclohexyl-1,4-benzochinon und 2-Benzyl-5-methoxy-1,4-benzochinon.

Beispiele für Diamine der Formel (11) sind folgende:

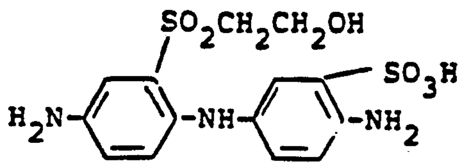

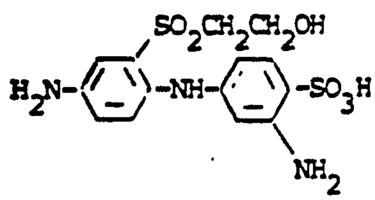

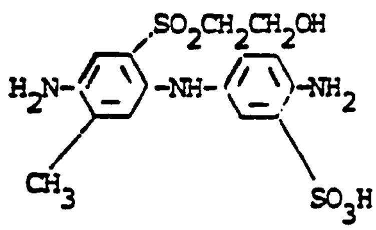

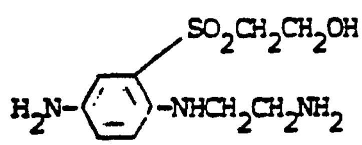

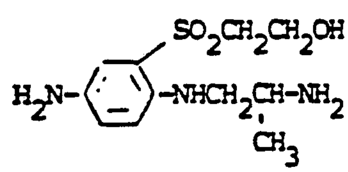

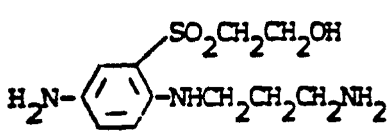

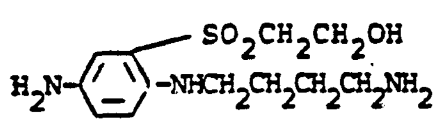

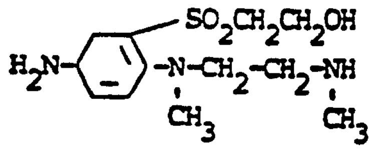

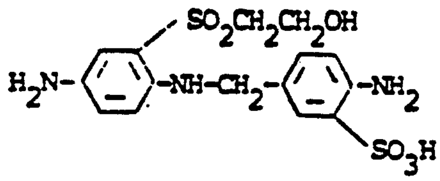

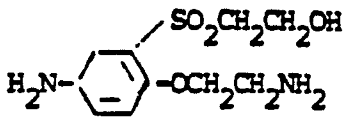

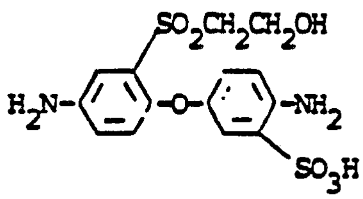

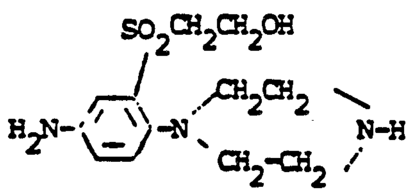

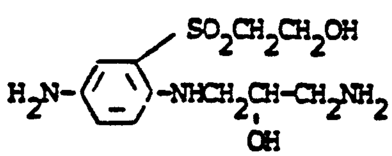

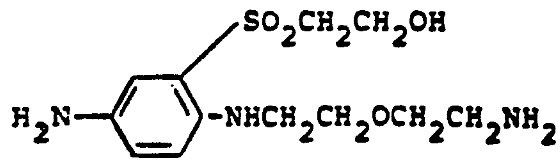

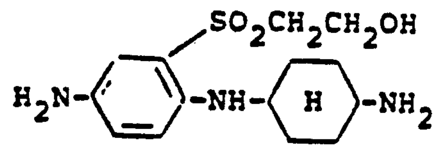

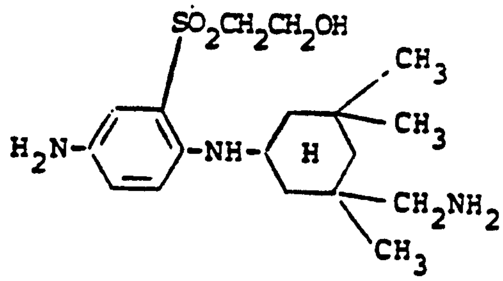

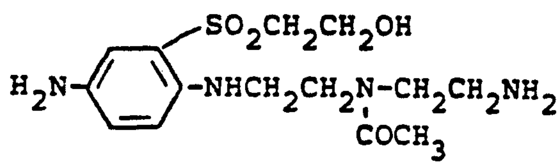

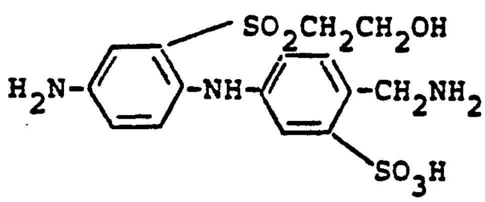

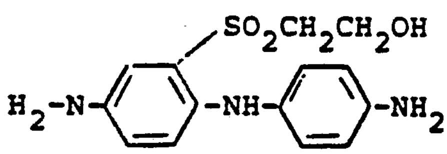

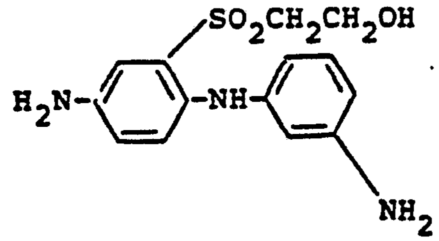

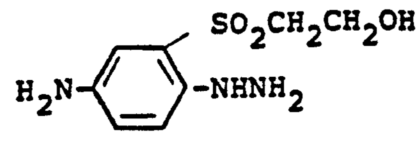

Alternativ können Aminotriphendioxazinverbindungen für die Verwendung beim erfindungsgemäßen Verfahren dadurch hergestellt werden, daß man Chinone der Formel:

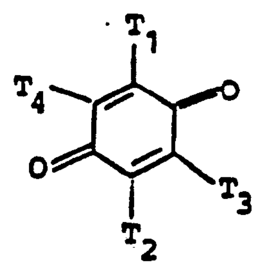

(12)

worin $T_1$ und $T_2$ die oben angegebenen Bedeutungen besitzen, eines der Symbole $T_3$ und $T_4$ für H, Cl oder Br steht und das andere der Symbole für Cl oder Br steht, mit einem Diamin der Formel (10) umsetzt.

Beispiele für Chinone der Formel (12) sind:

2,3,5,6-Tetrachlor-1,4-benzochinon, 2,3,5,6-Tetrabrom-1,4-benzochinon, 2-Methyl-3-chloro-1,4-benzochinon, 2-Methyl-6-chloro-1,4-benzochinon, 2-Methyl-3,5-dichloro-1,4-benzochinon, 2-Methyl-3,5,6-tribromo-1,4-benzochinon, 2-(4'-Methylphenyl)-3,6-dibromo-1,4-benzochinon, 2-(3'-Methylphenoxy)-3,6-dibromo-1,4-benzochinon, 2-Methyl-3,5,6-trichloro-1,4-benzochinon, 2-Methyl-3-chloro-5-bromo-1,4-benzochinon, 2-Methyl-3,6-dichloro-1,4-benzochinon, 2-Methyl-3,6-dichloro-5-bromo-1,4-benzochinon, 2-Phenyl-3,6-dichloro-1,4-benzochinon, 2-(4'-Methoxyphenyl)-3,6-dichloro-1,4-benzochinon, 2-(4'-Chlorophenyl)-3,6-dichloro-1,4-benzochinon, 2-(4'-Nitrophenyl)-3,6-dichloro-1,4-benzochinon, 2-(4'-Nitrophenyl)-3,5,6-trichloro-1,4-benzochinon, 2,5-Dimethyl-3,6-dibromo-1,4-benzochinon, 2,5-Dimethyl-3-chloro-1,4-benzochinon, 2-Methyl-5-n-propyl-6-bromo-1,4-benzochinon, 2-Methyl-5-isopropyl-3-chloro-1,4-benzochinon, 2-Methyl-5-isopropyl-6-bromo-1,4-benzochinon und 2-(2'-Chlorophenyl)-3,5,6-tribromo-1,4-benzochinon.

Das obige Verfahren ist besonders geeignet für die Herstellung von Aminotriphendioxazinen, in denen $T_1$ für Alkyl oder Aryl oder Halogen und $T_2$ für Halogen steht.

Ein weiteres Verfahren zur Herstellung von Aminotriphendioxazinen für die Verwendung beim erfindungsgemäßen Verfahren wird dadurch ausgeführt, daß man ein Chinon der Formel:

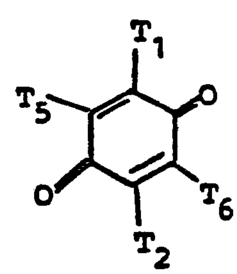

(13)

worin $T_1$ und $T_2$ die oben angegebenen Bedeutungen besitzen und eines der Symbole $T_5$ und $T_6$ für H, für Halogen oder $OR_2$ steht und das andere für $OR_2$ steht, wobei $R_2$ für Alkyl, Aryl oder Aralkyl steht, die alle gegebenenfalls substituiert sein können, mit einem Diamin der Formel (11) umsetzt.

Wenn sowohl $T_5$ als auch $T_6$ in dem Chinon der Formel (13) für $OR_2$ steht, dann können sie gleiche oder

verschiedene Gruppen der Type $OR_2$ sein.

Beispiele für Chinone der Formel (10) sind:

2-Ethyl-3,6-dimethoxy-1,4-benzochinon, 2-Chloro-3,6-dimethoxy-1,4-benzochinon, 2,3,5-Trimethoxy-1,4-benzochinon, 2,5-Dimethyl-3,6-dimethoxy-1,4-benzochinon, 2,5-Dimethyl-3,6-dimethoxy-1,4-benzochinon, 2-Methyl-3,6-dimethoxy-1,4-benzochinon, 2-Methyl-5,6-dimethoxy-1,4-benzochinon, 2-Ethyl-3,6-dimethoxy-1,4-benzochinon, 2-Chloro-3-n-propyl-5-methoxy-1,4-benzochinon, 2-Chloro-3,5-dimethoxy-1,4-benzochinon, 2-Methyl-3-methoxy-1,4-benzochinon, 2,3,5,6-Tetramethoxy-1,4-benzochinon, 2,3,5,6-Tetraphenoxy-1,4-benzochinon, 2,3,5,6-Tetra-(4'-methylphenoxy)-1,4-benzochinon, 2,3,5,6-Tetra-(4'-methoxyphenoxy)-1,4-benzochinon, 2,3,5,6-Tetra-(4'-chlorophenoxy)-1,4-benzochinon, 2,3,5,6-Tetra-(3',5'-dimethylphenoxy)-1,4-benzochinon, 2,3,5,6-Tetra-4-(3'-methyl-4'-chlorophenoxy)-1,4-benzochinon und 2,3,5,6-Tetra-(2'-naphtoxy)-1,4-benzochinon.

Das obige Verfahren zur Herstellung von Aminotriphendioxazinen ist besonders geeignet für Chinone der Formel (13), worin $T_1$, $T_2$, $T_5$ und $T_6$ alle für Gruppen stehen, die aus den oben für $OR_2$ definierten Typen ausgewählt sind.

Beispiele für Triazine der Formel (7), die bei der Herstellung der bevorzugten Farbstoffe der Formel (3), (4) und (4a) eingesetzt werden, sind 2,4,6-Trichlortriazin und 2,4,6-Trifluortriazin.

Als Amine der Formeln (8), die als Ausgangsstoffe zur Herstellung der faserreaktiven Farbstoffe der Formel (3), (4) und (4a) verwendet werden können, seien beispielsweise die folgenden genannt:

Ammoniak, Methylamin, Dimethylamin, Ethylamin, Diethylamin, Propylamin, Isopropylamin, Butylamin, Dibutylamin, Isobutylamin, sek.-Butylamin, Hexylamin, Methoxyethylamin, Ethoxyethylamin, Methoxypropylamin, Chlorethylamin, Hydroxyethylamin, Dihydroethylamin, Hydroxypropylamin, Aminethansulfonsäure, β-Sulfatoethylamin, Benzylamin, Cyclohexylamin, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Ethylanilin, 3- oder 4-Acetylaminanilin, o-, m- und p-Nitroanilin, o-, m- und p-Aminophenyl, 2-Methyl-4,-nitroanilin, 2-Methyl-5-nitroanilin, 2,5-Dimethoxy-anilin, 3-Methyl-4-nitroanilin, 2-Nitro-4-methylanilin, 3-Nitro-4-methylanilin, o-, m- und p-Anisidin, o-, mund p-Phenetidin, 2-Methoxy-5-methylanilin, 2-Ethoxy-5-methoxyanilin, 4-Bromanilin, 4-Aminophenylsufamid, 3-Trifluormethylanilin, 3- und 4-Aminophenylharnstoff, 1-Naphthylamin, 2-Naphtylamin, 2-Amino-1-hydroxynaphthalin, 1-Amino-4-hydroxy-naphthalin, 1-Amino-8-hydroxy-naphthalin, 1-Amino-2-hydroxy-naphthalin, 1-Amino-7-hydroxy-naphthalin, Orthanilsäure, Metanilsäure, Sulfanilsäure, Anilin-2,4-disulfonsäure, Anilin-2,5-disulfonsäure, Anilin-3,5-disulfonsäure, Anthranilsäure, m- und p-Aminobenzoesäure, 4-Aminophenylmethansulfonsäure, 2-Aminotoluol-4-sulfonsäure, 2-Aminotoluol-5-sulfonsäure, p-Aminosalicylsäure, 1-Amino-4-carboxy-benzol-3-sulfonsäure, 1-Amino-2-carboxy-benzol-5-sulfonsäure, 1-Amino-5-carboxy-benzol-2-sulfonsäure, 1-Naphthylamin-2-, 3-, 4-, 5-, 6-, 7- und -8-sulfonsäure, 2-Naphthylamin-1-, -3-, -4-, -5-, -6-, -7- und -8-sulfonsäure, 1-Naphthyl-amin-2,4-, -2,5-, -2,7, -2,8-, -3,5-, -3,6-, -3,7-, -3,8-, -4,6-, -4,7-, -4,8- und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4, 6-, -2,4,7-, -2,5,7-, -3,5,7-, -3,6,8- und -4,6,8-trisulfonsäure, 2-Naphthylamin-1,3,7-, -1,5,7-, -3,5,7-, -3,6,7-, -3,6,8- und -4,6,8-trisulfonsäure, 2-, 3- und 4-Aminopyrimidin, 2-Aminobenzthiazol, 5-, 6- und 8-Amino-chinolin, 2-Aminopyrimidin, Morpholin, Piperidin und Piperazin, N-β-Hydroxyethylanilin, Semicarbazid, Benzoesäurehydrazid, 4-(β-Sulfatoethylsulfonyl)-anilin-3-(β-Sulfatoethylsulfonyl)-anilin, 4-Amino-1-methoxy-benzol-2-sulfonsäure, 4-Amino-1-ethoxy-benzol-2-sulfonsäure, 4-Aminophenol-6-sulfonsäure, 2-Aminophenol-5-sulfonsäure, 4-Aminotoluol-2-sulfonsäure, β-N-Methylaminopropionitril, β-Aminopropionitril, Aminoessigsäure.

Die neuen Farbstoffe der Formel (1) eignen sich zum Färben und Bedrucken von Hydroxyl- oder Amidgruppen enthaltenden Materialien, wie Textilfasern-, Fäden und Geweben aus Wolle, Seide, synthetischen Polyamid- und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekanntgewordenen Verfahren erfolgt.

Die angegebenen Formeln sind die der entsprechenden freien Säuren. Die Farbstoffe wurden im allgemeinen in Form der Alkalisalze, insbesondere der Na-Salze isoliert und zum Färben eingesetzt.

Die in den Beispielen genannten Gewichte beziehen sich auf die freie Säure. Die in den Beispielen angegebenen Farbkennzahlen beziehen sich auf Colour Index Hue Indication Chart (Indicator Numbers).

Die in den folgenden Beispielen angegebenen Formeln beziehen sich auf jeweils eines der bei der Umsetzung entstehenden isomeren Reaktionsprodukte, wobei bezüglich der Stellung der Substituenten in den beiden äußeren aromatischen Ringen des Triphendioxazin-Systems der isomeren Reaktionsprodukte auf das unter Formel (1a) Gesagte verwiesen werden.

In der DE-C 1 265 698 werden Dioxazin-Reaktivfarbstoffe beschrieben, die mindestens einmal die Gruppierung $-SO_2CH=CH_2$ oder eine in eine solche Gruppierung überführbare Gruppierung und mindestens eine Halogentriazingruppierung enthalten, wobei die beiden genannten Gruppierungen direkt miteinander verknüpft sind.

In der EP-A 53 743 werden Dioxazin-Reaktivfarbstoffe beschrieben, die einen Sulfatoethylamino-Rest und einen über eine Sulfonamid-Brücke gebundenen heterocyclischen Reaktivrest aufweisen.

**Beispiel 1**

Zu einer eiskaltan, neutralen Lösung von 17,3 g o-Sulfanilsäure in 400 ml Wasser tropft man in 10 Minuten 14,8 g Cyanurfluorid und hält durch gleichzaitige Zugabe von 15 %iger Sodalösung den pH zwischen 5,5 und 6,5. Nach vollständiger Acylierung gibt man eine Anschlämmung von 0,045 Mol des Farbstoffs der Formel

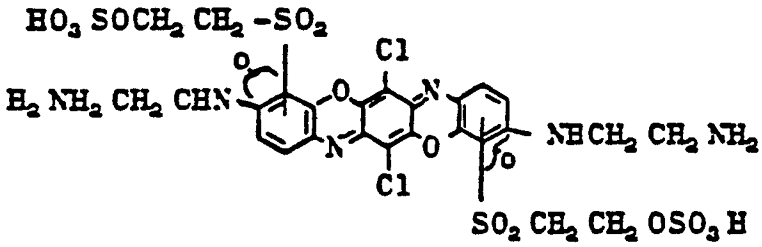

in 400 ml wasser bei 0 - 5° C zu. Durch Zugabe von 2n- Natronlauge wird die Rondensation bei 0-5° C und pH 7,5-8,0 ausgeführt. Der Farbstoff wird durch Zugabe von 10 Volumenprozent Kochsalz ausgesalzen, abgesaugt und im Vakuum bei 50 - 60° C getrocknet. Nach dem Mahlen erhält man ein blaues Farbstoffpulver, das Baumwolle in brillanten Blautönen färbt (Farbkennzahl 13). Der Farbstoff entspricht der Formel

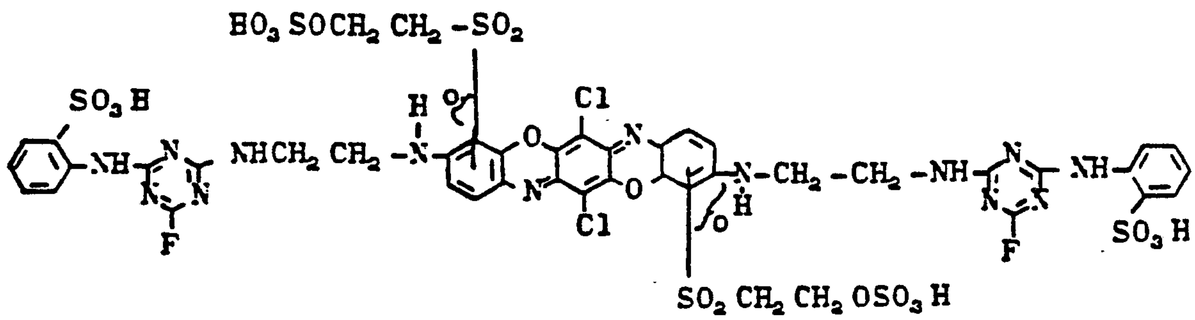

Durch Diacylierung des obigen Diaminotriphendioxazinfarbstoffs mit 2 Äquivalenten der aus den unten aufgeführten Aminen nach den Angaben von Beispiel 1 hergestellten Difluortriazinverbindungen erhält man weitere Farbstoffe, die Baumwolle in brillanten Blautönen färben (Farbkennzahl 13).

**Tabelle 1:**

Anilin-2,5-disulfonsäure, Anilin-2,4-disulfonsäure, m-Sulfanilsäure, p-Sulfanilsäure, 2-Amino-toluol-5-sulfonsäure, 2-Amino-toluol-4-sulfonsäure, 2-Amino-anisol-5-sulfonsäure, 2-Amino-anisol-4-sulfonsäure, 4-Amino-anisol-3-sulfonsäure, 4-Amino-anisol-2-sulfonsäure, 2-Amino-1-chlor-benzol-4-sulfonsäure, 2-Amino-1-chlor-benzol-5-sulfonsäure, 2-Amino-naphthalin-1,5-disulfonsäure, 1-Amino-naphthalin-4,7-disulfonsäure, Taurin, Aminolsulfat, 1-Amino-4-methoxy-benzoldisulfonsäure-2,5, 1-Amino-4-methyl-benzoldisulfonsäure-2,5.

Nach der Arbeitsweise des in Beiepiel 1 beschriebenen Verfahrens erhält man weitere wertvolle Reaktivfarbstoffe, die Baumwolle in brillanten Blautönen mit der Farbkennzahl 14 färben, wenn man als Ausgangsmaterial die nachfolgend aufgeführten Diaminotriphendioxazinfarbstoffe und die in Beispiel 1 bzw. Tabelle 1 genannten Aminkomponenten einsetzt.

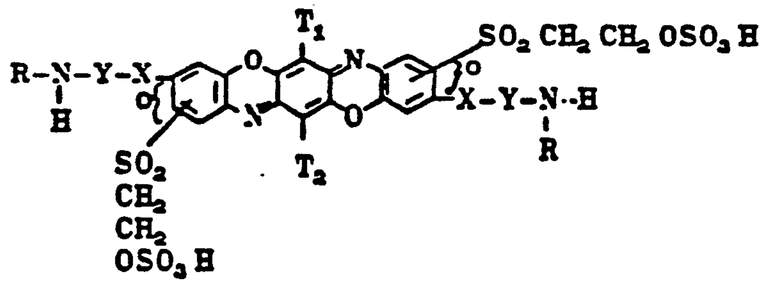

Tabelle 2:

| Beispiel | $T_1$ | $T_2$ | $-X-Y-\underset{R}{N}-H$ |
|---|---|---|---|
| 1 | Cl | Cl | $-\underset{H}{N}-CH_2CH_2CH_2NH_2$ |

| Beispiel | $T_1$ | $T_2$ | $-X-Y-\underset{H}{N}-H$ |
|---|---|---|---|
| 2 | Cl | Cl | $-\underset{H}{N}-CH_2-\underset{CH_3}{CH}-NH_2$ |
| 3 | Cl | Cl | $-\underset{H}{N}-(CH_2)_4-NH_2$ |
| 4 | Cl | Cl | $-\underset{H}{N}-(CH_2)_5-NH_2$ |
| 5 | Cl | Cl | $-\underset{H}{N}-(CH_2)_6-NH_2$ |
| 6 | Cl | Cl | 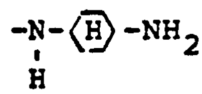 |
| 7 | Cl | Cl | 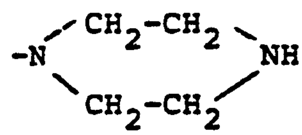 |

| | | | |
|---|---|---|---|
| 8 | Cl | Cl | $-N-CH_2-CH-CH_2-NH_2$<br>$H \quad OSO_3H$ |
| 9 | Cl | Cl | $-O-CH_2CH_2-NH_2$, klares Rot, Farbkennzahl 10 |
| 10 | Cl | Cl | $-N-CH_2CH_2NCH_2CH_2-NH_2$<br>$H \quad COCH_3$ |
| 11 | Cl | Cl | $-N-CH_2CH_2OCH_2CH_2-NH_2$<br>$H$ |
| 12 | Cl | Cl | $-N-CH_2CH_2-NH$<br>$CH_3 \quad CH_3$ |
| 13 | Br | Br | $-N-CH_2CH_2-NH_2$<br>$H$ |

| Beispiel | $T_1$ | $T_2$ | $-X-Y-N-H$<br>$H$ |
|---|---|---|---|
| 14 | Br | Br | $-N-CH_2CH_2CH_2-NH_2$<br>$H$ |
| 15 | Br | Br | $-N-CH_2CH-NH_2$<br>$H \quad CH_3$ |
| 16 | Br | Br | $-N-(CH_2)_6-NH_2$<br>$H$ |
| 17 | Br | Br | $-N-CH_2CH_2-NH$<br>$CH_3 \quad CH_3$ |
| 18 | $CH_3$ | $CH_3$ | $-N-CH_2CH_2-NH_2$<br>$H$ |
| 19 | Cl | $CH_3$ | " |
| 20 | Br | $CH_3$ | " |
| 21 | $OCH_3$ | $OCH_3$ | " |
| 22 | H | Cl | " |
| 23 | H | Br | " |

| | | | |
|---|---|---|---|
| | | | $-\underset{H}{N}-CH_2CH_2-NH_2$ |
| 24 | H | $CH_2$ | " |
| 25 | H | H | " |
| 26 | H | $OCH_3$ | " |
| 27 | 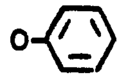 | 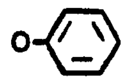 | " |

Der in Beispiel 1 eingesetzte Diaminotriphendioxazinfarbstoff kann nach einem der drei folgenden Verfahren erhalten werden:

a) 34,55 g (0,05 Mol) des Dianilides der Formel

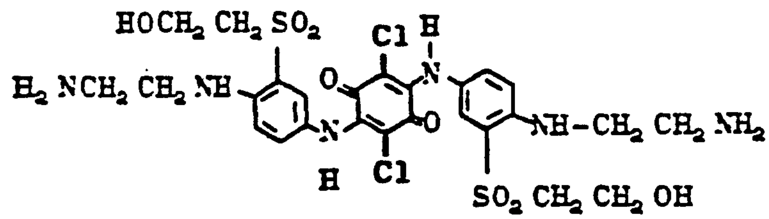

werden in 800 g 25 %iges Oleum bei 25 bis 40°C eingetragen. Man erwärmt in 15 Minuten auf 50 bis 60°C und rührt solange bis die Cyclisierung beendet ist (läßt sich im Dünnschichtchromatogramm verfolgen). Nach dem Abkühlen auf Raumtemperatur trägt man auf 2 kg Eiswasser aus. Man saugt ab und rührt die Paste in 1 l Eiswasser an. Durch Einstreuen von Natriumhydrogencarbonat wird der pH auf 5-6 gestellt. Der Niederschlag wird abgesaugt und mit wasser ausgewaschen. Der Farbstoff entspricht folgender Formel

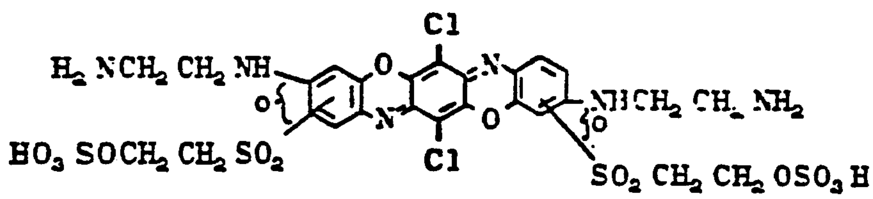

b) 34,55 g des Dianilides werden in 15 Minuten in 400 g 20 %iges Oleum unter Rühren bei 20 bis 25°C eingetragen. 22,8 g Ammoniumpersulfat werden dann in 7 gleichgroßen Portionen im Abstand von je einer Stunde bei 30°C eingetragen. Man rührt noch 1 Stunde bei 20 bis 30°C nach. Das Reaktionsgemisch wird auf 1 kg Eiswasser ausgetragen. Die weitere Aufarbeitung erfolgt wie bei a) angegeben.

c) 34,55 g des Dianilides werden in 40 Minuten unter gutem Rühren bei 20 bis 30°C in ein Gemisch aus 80 ml 20 %igem und 60 ml 65 %igem Oleum eingetragen. Bei 20°C werden .1 g Kaliumjodid zugesetzt. Man rürt 45 Minuten bei 20°C bis 23°C und läßt dann die Schmelze in 1000 g Eis und 200 ml Wasser einlaufen, so daß die Temperaturen nicht über 10°C steigt. Die weitere Aufarbeitung erfolgt wie bei a) angegeben. Der Farbstoff entspricht der bei Beispiel a angegebenen Formel.

Das in den Beispielen a, b bzw. c als Ausgangsmaterial verwendete Dianilid kann nach bekannten Methoden auf folgendem Weg hergestellt werden:

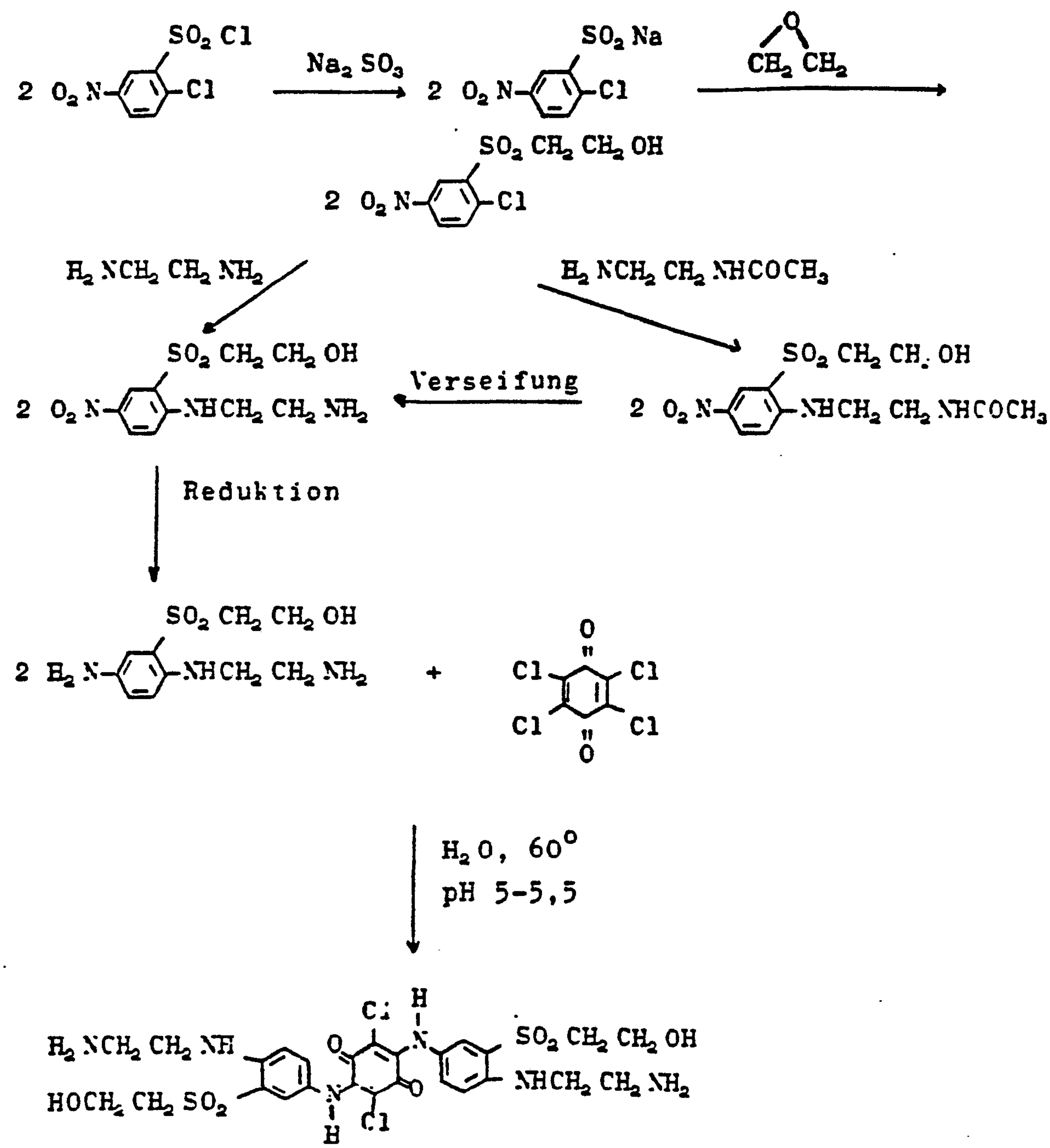


**Beispiel 2**

110,3 g des Triphendioxazinfarbstoffe der Formel

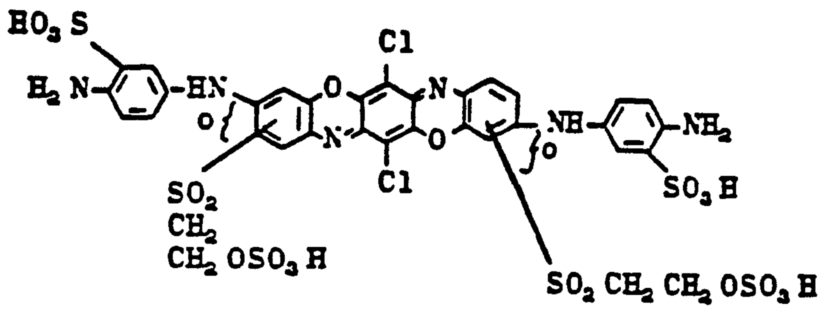

werden in 2 l Eiswasser neutral gelöst. Bei 0°C tropft man in 20 Minuten 27 g Trifluortriazin ein und hält dabei durch gleichzeitige Zugabe von verdünnter Sodalösung den pH zwischen 5,5 und 6,5. Nach beendeter Acylierung (falls noch freie Aminogruppen vorhanden sind, setzt man noch etwa Trifluortriazin nach) wird eine neutrale Lösung von 34,6 g m-Sulfanilsäure in 100 ml Wasser zugegeben, wobei die freiwerdende Flußsäure mit verdünnter Sodalösung neutralisiert wird (pH 6-7). Man läßt dabei die Temperatur auf 10-15°C ansteigen. Der Farbstoff wird durch Zugabe von 20 Volumen % Natriumchlorid ausgesalzen. Nach dem Absaugen, Trocknen bei 60°C im Vakuumtrockenschrank und Mahlen erhält man ein blaues Farbstoffpulver, das Baumwolle in brillanten blauen Tönen färbt (Farbkennzahl 14). Der Farbstoff entspricht der Formel

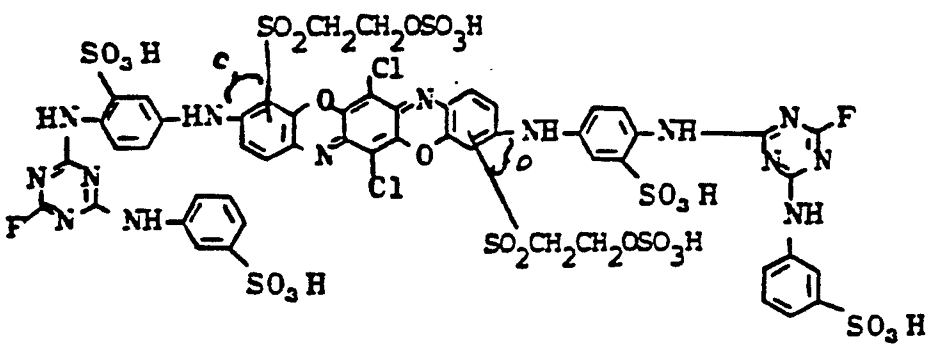

Nach der Arbeitsweise dieses Beispiels erhält man weitere wertvolle Farbstoffe, die Baumwolle in brillanten blauen Tönen mit der Farbkennzahl 14 färben, wenn man anstelle der in diesem Beispiel verwendeten m-Sulfanilsäure eine äquivalente Menge der nachfolgend aufgeführten Amine verwendet.

**Tabelle 1**

Ammoniak, Taurin, N-Methyltaurin, Aminosulfat, Ethanolamin, Diethanolamin, Methylamin, Diethylamin, p-Sulfanilsäure, 1-Amino-4-methoxy-benzolsulfonsäure-3, 1-Amino-4-methyl-benzolsulfonsäure-3, 1-Amino-4-ethoxy-benzolsulfonsäure-3, N-Methylanilin, N-Ethylanilin, N-β-Hydroxyethylanilin, 1-Amino-2-methyl-benzolsulfonsäure-4, 1-Amino-2-chlor-benzolsulfonsäure-4, 1-Amino-2-chlor-benzoleulfonsäure-5, o-Sulfanilsäure, 1-Amino-2-methoxy-benzolsulfonsäure-4, 1-Amino-2-methoxy-benzolsulfonsäure-5, 1-Amino-2-methoxy-5-methyl-benzolsulfonsäure-4, Semicarbazid.

Nach der Arbeitsweise des in Beispiel 2 beschriebenen Verfahrens erhält man weitere wertvolle Reaktivfarbstoffe, die Baumwolle in brillanten Blautönen färben (Farbkennzahl 14), wenn man als Ausgangsmaterial die nachfolgend aufgeführten Diaminotriphendioxazinfarbstoffe und die in Beispiel 2, Tabelle 1 genannten Aminkomponenten einsetzt.

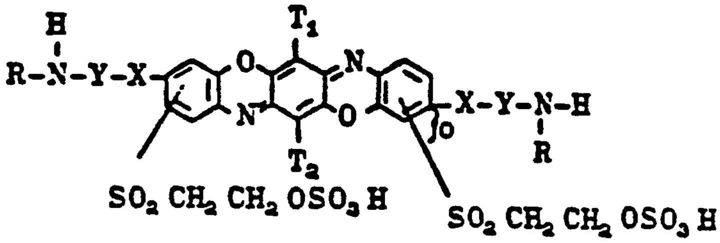

**Tabelle 2**

| Beispiel | $T_1$ | $T_2$ | -X-Y-N-H<br>R |
|---|---|---|---|
| 1 | Cl | Cl | 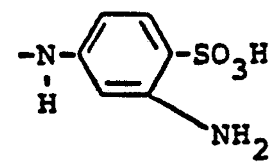 |
| 2 | Br | Br | " |
| 3 | H | H | " |
| 4 | $CH_3$ | $CH_3$ | " |
| 5 | $CH_3$ | $CH_3$ | " |
| 6 | $OCH_3$ | $OCH_3$ | " |

Weitere wertvolle Farbstoffe, die Baumwolle in brillanten Blautönen färben erhält man, wenn man anstelle von 2,4,6-Trifluortriazin eine äquivalente Menge 2,4,6-Trichlortriazin wie in den Beispielen 1 bzw. 2 verwendet, dabei die Reaktionsbedingungen so abwandelt, wie sie aus der Literatur für die Umsetzung mit 2,4,6-Trichlortria-zin bekannt sind und die in den Beispielen 1 und 2, Tabelle 1 bzw. Tabelle 2 genannten Diaminotriphendioxazine und Aminkomponenten verwendet.

**Beispiel 3**

0,1 mol des Triphendioxazinfarbstoffs der Formel

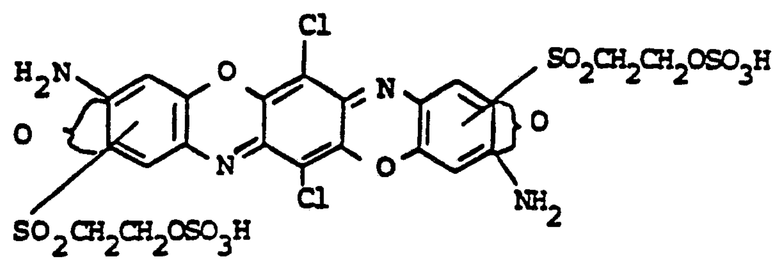

(hergestellt analog Bsp. 1a, 1b oder 1c)

werden in 2 l Eiswasser bei pH 5,5 gelöst. Bei 0° tropft man in 20 Minunten 0,11 mol Trifluortriazin ein und hält dabei durch gleichzeitige Zugabe von verdünnter Sodalösung den pH zwischen 5,5 und 6,5. Nach beendeter Monoacylierung wird eine neutrale Lösung von 0,1 mol m-Sulfanilsäure in 100 ml Wasser zugegeben, wobei die freiwerdende Flußsäure mit verdünnter Sodalösung neutralisiert wird (pH 5,5-6,5). Man läßt dabei die Temperatur auf 15-20°C ansteigen. Der Farbstoff wird durch Zugabe von 20 Volumen-% Natriumchlorid ausgesalzen. Nach dem Absaugen, Trocknen bei 60° im Vakuumtrockenschrank und Mahlen erhält man ein blaues Farbstoffpulver, das Baumwolle in klaren rotstichig blauen Tönen färbt (Farbkennzahl 13). Der Farbstoff entspricht der Formel

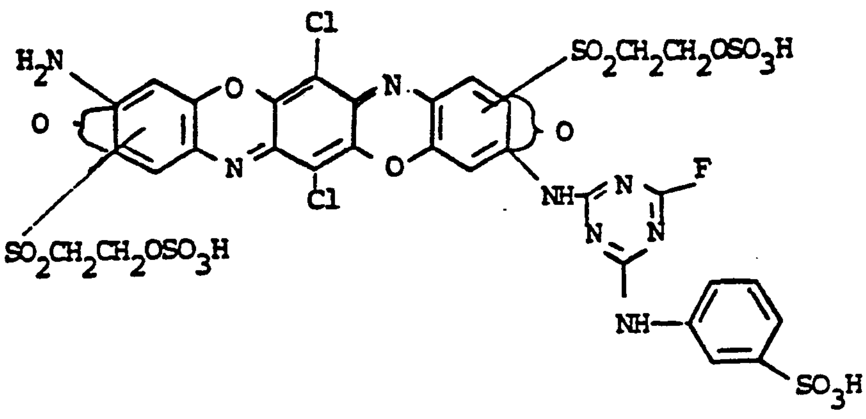

Nach der Arbeitsweise dieses Beispiels erhält man weitere wertvolle Farbstoffe, die Baumwolle in brillanten blauen Tönen mit der Farbkennzahl 13 färben, wenn man anstelle der in diesem Beispiel verwendeten m-Sulfanilsäure eine äquivalente Menge der nachfolgend aufgeführten Amine verwendet.

**Tabelle 1**

Ammoniak, Taurin, N-Methyltaurin, Aminosulfat, Ethanolamin, Diethanolamin, Methylamin, Diethylamin, p-Sulfanilsäure, 1-Amino-4-methoxy-benzolsulfonsäure-3, 1-Amino-4-methyl-benzolsulfonsäure-3, 1-Amino-4-ethoxy-benzolsulfonsäure-3, N-Methylanilin, N-Ethylanilin, N-β-Hydroxyethylanilin, 1-Amino-2-methyl-benzolsulfonsäure-4, 1-Amino-2-chlor-benzolsulfonsäure-4, 1-Amino-2-chlor-benzolsulfonsäure-5, o-Sulfanilsäure, 1-Amino-2-methoxy-benzolsulfonsäure-4, 1-Amino-2-methoxy-benzolsulfonsäure-5, 1-Amino-2-methoxy-5-methyl-benzolsulfonsäure-4, Semicarbazid.

**Patentansprüche**

1. Triphendioxazinfarbstoffe der Formel

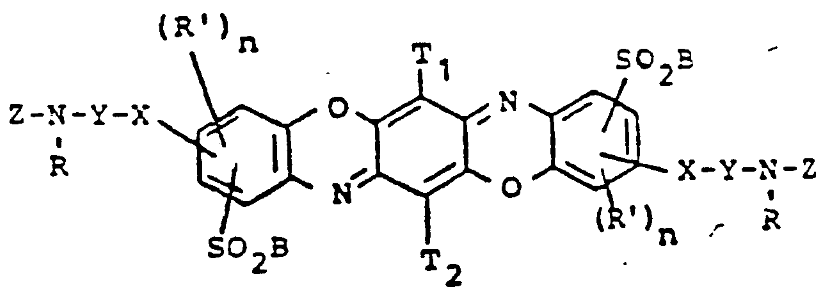

worin
B = $CH=CH_2$ oder $CH_2CH_2W$,
worin
W = abspaltbare Gruppe wie $OSO_3H$, Cl, $S_2O_3H$, $OCOCH_3$, $OPO_3H_2$, $-N^{\oplus},(CH_3)_3$
R = H oder gegebenenfalls substituiertes $C_1$-$C_4$-Alkyl,
Z = Reaktivgruppe oder H.
$T_1$ und $T_2$ für H, Cl, Br, $C_1$-$C_4$-Alkoxy, $C_1$-$C_4$-Alkyl, gegebenenfalls substituiertes Phenyl oder Phenoxy stehen,
X für O, S oder

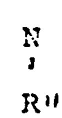

steht,
Y fur einen gegebenenfalls weiter substituierten zweiwertigen aliphatischen, araliphatischen, cycloaliphatischen oder aromatischen Rest steht, oder

X und Y zusammen für eine direkte Bindung oder

$$-\underset{R}{\overset{|}{N}}-$$

steht,

R' für Halogen, insbesondere Cl und Sr, $SO_3H$, $C_1$-$C_4$-Alkyl, $C_1$-$C_4$-Alkoxy oder COOH steht,

R'' für Wasserstoff, oder gegebenenfalls substituiertes $C_1$-$C_4$-Alkyl steht und für den Fall, daß Y einen gegebenefalls substituierte aliphatischen-zweiwertigen Rest bedeutet, zusammen mit R auch für Alkylen, vorzugsweise $-CH_2CH_2$-steht,

n 0 oder 1 bedeutet

und worin der Rest $SO_2B$ in ortho-Stellung zum Substituenten

$$-X-Y-\underset{R}{\overset{|}{N}}-Z$$

steht.

2. Farbstoffe des Anspruch 1, worin mindestens ein Rest Z für eine Reaktivgruppe steht.

3. Farbstöffe des Anspruchs 1, worin -x-y- für eine direkte Bindung und ein Substituent Z für eine Reaktivgruppe und der andere Substituent Z für Wasserstoff steht.

4. Farbstoffe des Anspruchs 1 der Formel

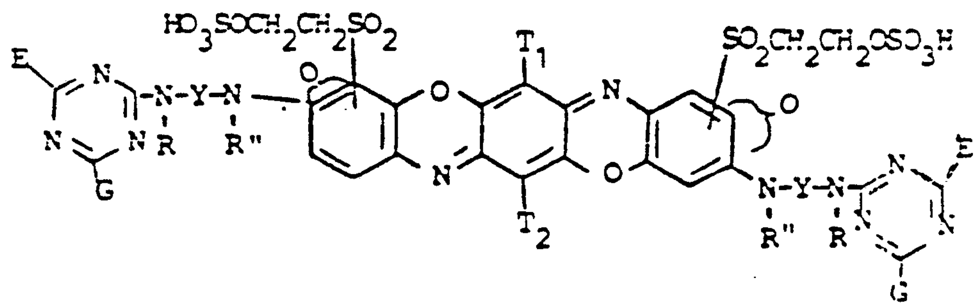

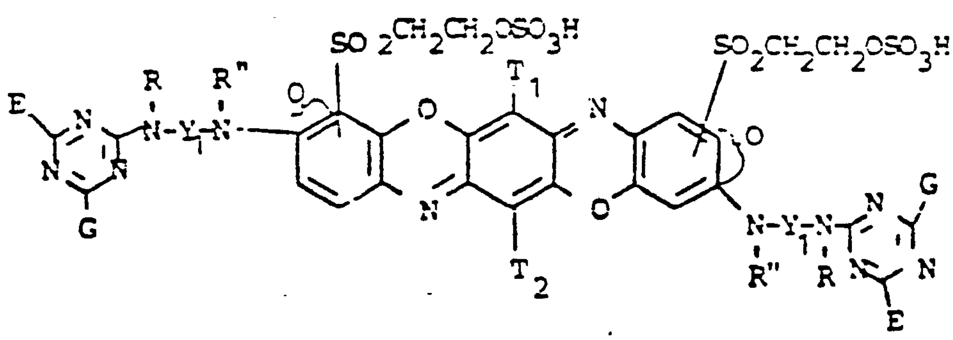

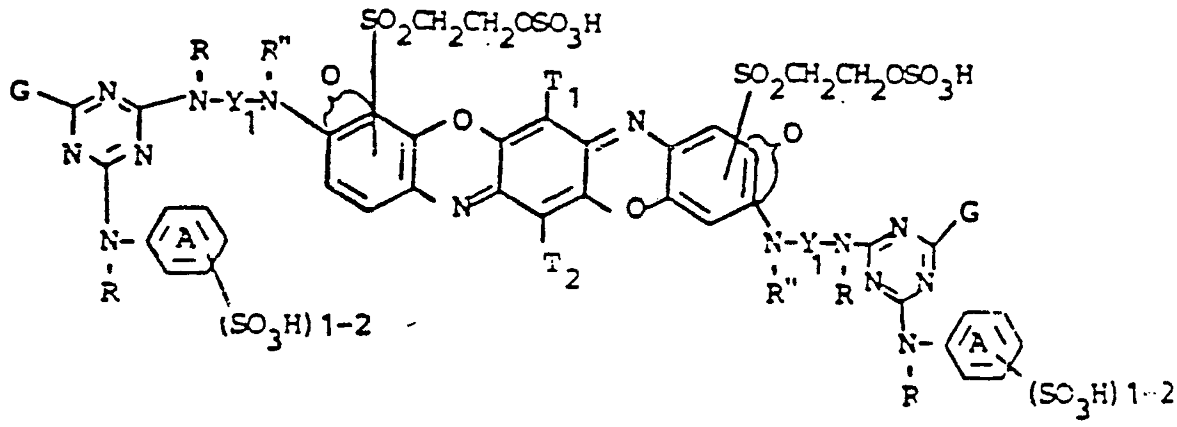

worin
E = gegebenenfalls substituierte Aminogruppe
G = F oder Cl
$Y_1$ = aliphtatischer Rest,

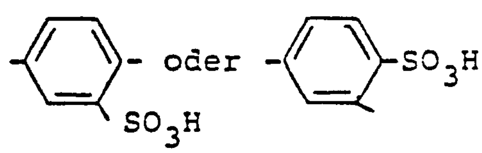

oder

und die Benzolringe A weitere Substituenten aufweisen können und $T_1$ $T_2$, R'', Y und R die in den Ansprüchen 1 und 2 angegebene Bedeutung haben.

5. Farbstoffe des Anspruchs 4 mit
$Y_1 = -(CH_2)_{2-4}$ oder

$$-CH_2-CH-CH_3$$

und
G = F

6. Farbstoffe der Ansprüche 4 und 5 mit R, R'' = H.

7. Farbstoffe der Formel

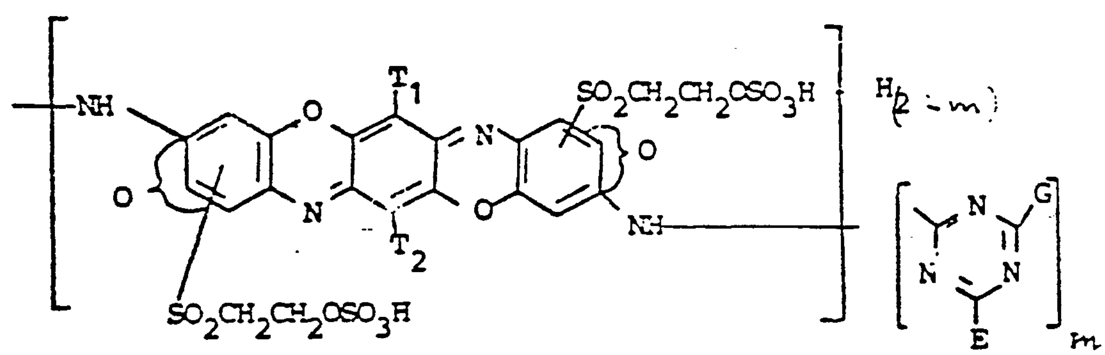

worin E, G, $T_1$ und $T_2$ die in Anspruch 4 angegebene Bedeutung haben und m = 1 oder 2.

8. Verwendung der Farbstoffe der Ansprüche 1 bis 7 zum Färben von Hydroxylgruppen oder Amidgruppen enthaltenden Fasermaterialien.

9. Mit den Farbstoffen der Ansprüche 1 bis 7 gefärbte Hydroxylgruppen oder Amidgruppen enthaltende Fasermaterialien.

**Claims**

1. Triphendioxazine dyestuffs of the formula

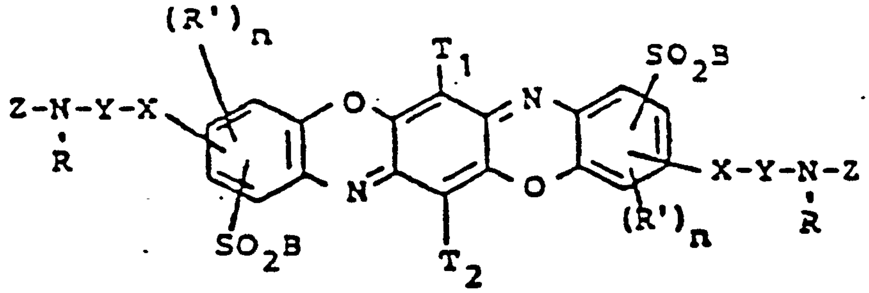

wherein
B = $CH=CH_2$ or $CH_2CH_2W$,
wherein
W = detachable group, such as $OSO_3H$, Cl, $S_2O_3H$, $OCOCH_3$, $OPO_3H_2$ or $-N^{\oplus}(CH_3)_3$,
R = H or optionally substituted $C_1$-$C_4$-alkyl,
Z = reactive group or H.
$T_1$ and $T_2$ stand for H, Cl, Br, $C_1$-$C_4$-alkoxy, $C_1$-$C_4$-alkyl optionally substituted phenyl or phenoxy,
X stands for O, S or

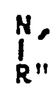

y stands for an optionally further-substituted divalent aliphatic araliphatic, cycloaliphatic or aromatic radical, or
X and Y together stand for a direct bond or

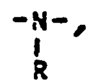

R' stands for halogen, in particular Cl and Br, $SO_3H$, $C_1$-$C_4$-alkyl, $C_1$-$C_4$-alkoxy or COOH,
R"stands for hydrogen or optionally substituted $C_1$-$C_4$-alkyl and in the event that Y denotes an optionally substituted aliphatic divalent radical together with R also stands for alkylene, preferably $-CH_2CH_2-$,
n denotes 0 or 1
and wherein the radical $SO_2B$ is in the ortho-position relative to the substituent

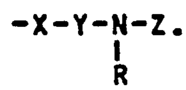

2. Dyestuffs of Claim 1, wherein at least one Z radical stands for a reactive group.

3. Dyestuffs of Claim 1, wherein -x-y- stands for a direct bond and one Z substituent stands for a reactive group and the other Z substituent stands for hydrogen.

4. Dyestuffs of Claim 1 of the formula

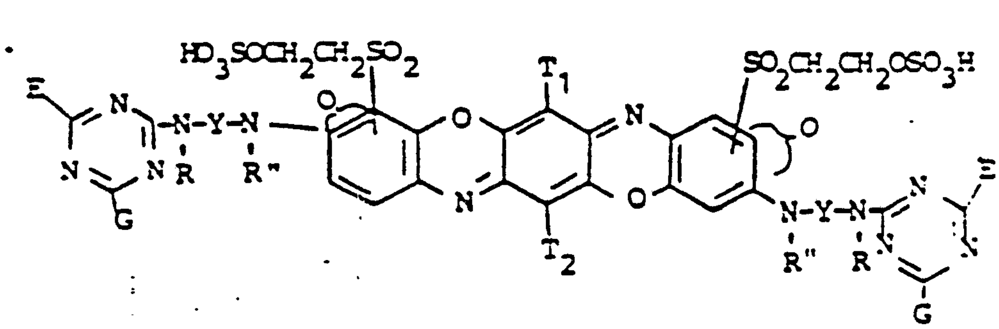

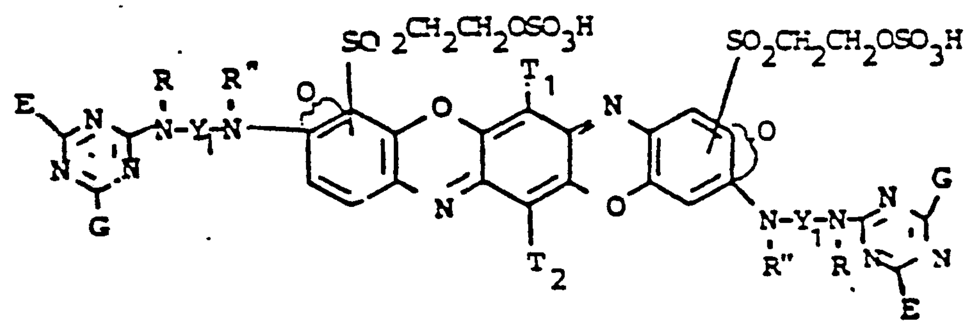

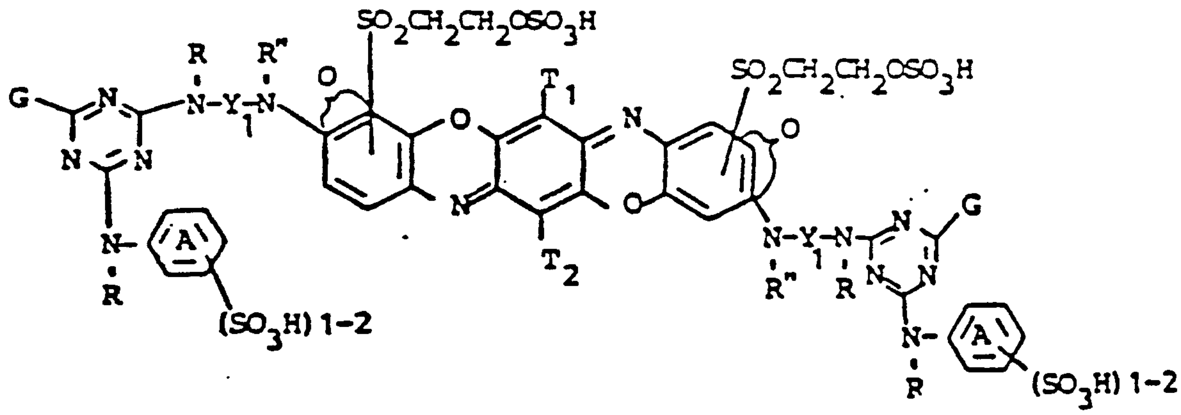

wherein

E = optionally substituted amino group

G = F or Cl

$Y_1$ - aliphatic radical,

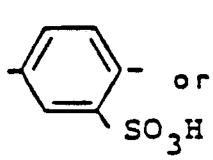 or 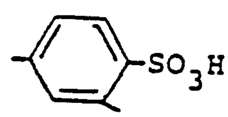

and the benzene rings A can have further substituents and $T_1$, $T_2$, R'', Y and R have the meaning given in Claims 1 and 2.

5. Dyestuffs of Claim 4 where

$Y_1$ = $-(CH_2)_{2\text{-}4}$ or $-CH_2\text{-}CH\text{-}CH_3$ and

G = F.

6. Dyestuffs of Claims 4 and 5 where R and R'' = H.

7. Dyestuffs of the formula

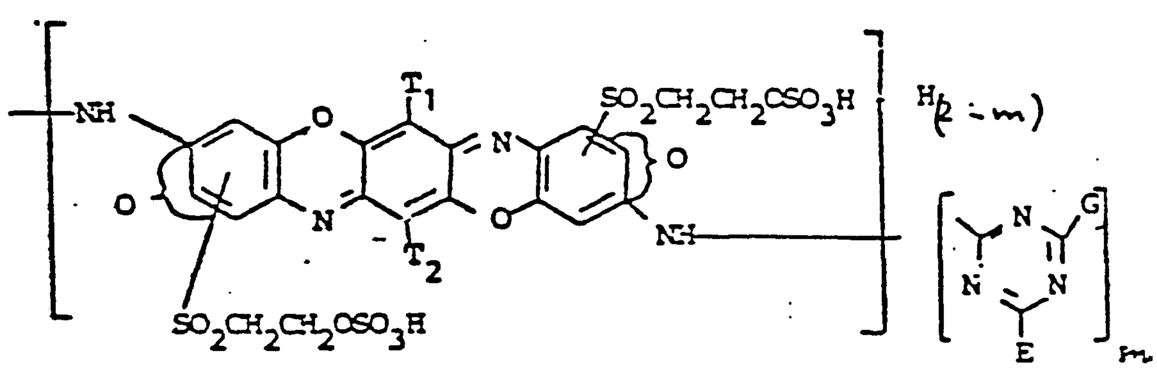

wherein

E, G, $T_1$ and $T_2$ have the meaing given in Claim 4 and n = 1 or 2.

8. Use of the dyestuffs of Claims 1 to 7 for dyeing fibre materials containing hydroxyl groups or amile groups.

9. Fibre materials containing hydroxyl groups or amide groups, dyed with the dyestuffs of Claims 1 to 7.

**Revendications**

1. Colorants triphénodioxaziniques de formule

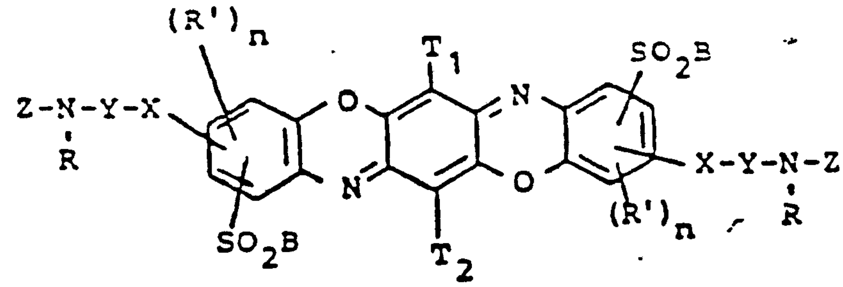

dans laquelle

B représente $CH=CH_2$ ou $CH_2CH_2W$, où

W est un groupe partant tel que $OSO_3H$, Cl, $S_2O_3H$, $OCOCH_3$, $OPO_3H_2$, $-N^{\oplus}(CH_3)_3$

R représente H ou un groupe alkyle en $C_1$ à $C_4$ éventuellement substitué,

Z représente H ou un groupe réactif,

$T_1$ et $T_2$ représentent H, Cl, Br, un groupe alkoxy en $C_1$ à $C_4$, alkyle en $C_1$ à $C_4$, phényle ou phénoxy éventuellement substitué,

X représente O, S ou

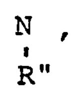

Y est un reste aliphatique, araliphatique, cycloaliphatique ou aromatique divalent lui-même substitué le cas échéant, ou bien

X et Y forment ensemble une liaison simple ou un groupe

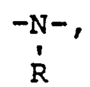

R' désigne un halogène, notamment Cl et Br, un groupe $SO_3H$, alkyle en $C_1$ à $C_4$, alkoxy en $C_1$ à $C_4$ ou COOH,

R'' est l'hydrogène ou un groupe alkyle en $C_1$ à $C_4$ éventuellement substitué et, au cas où Y désigne un reste aliphatique divalent éventuellement substitué, R'' forme aussi conjointement avec R un groupe alkylène, de préférence $-CH_2CH_2-$,

n a la valeur 0 ou 1

et dans laquellele reste $SO_2B$ est en position ortho par rapport au substituant

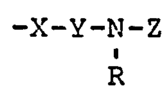

2. Colorants suivant la revendication 1, dans lesquels au moins un reste Z représente un groupe réactif.

3. Colorants suivant la revendication 1, dans lesquels -x-y- représentent une liaison simple, et un substituant Z représente un groupe réactif, et l'autre substituant Z représente l'hydrogène.

4. Colorants suivant la revendication 1, de formule

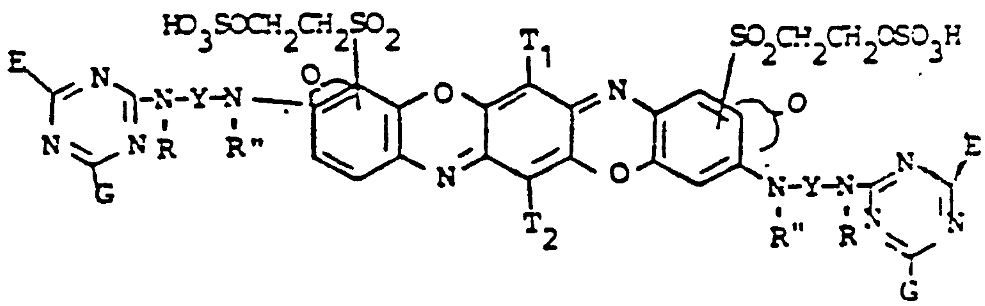

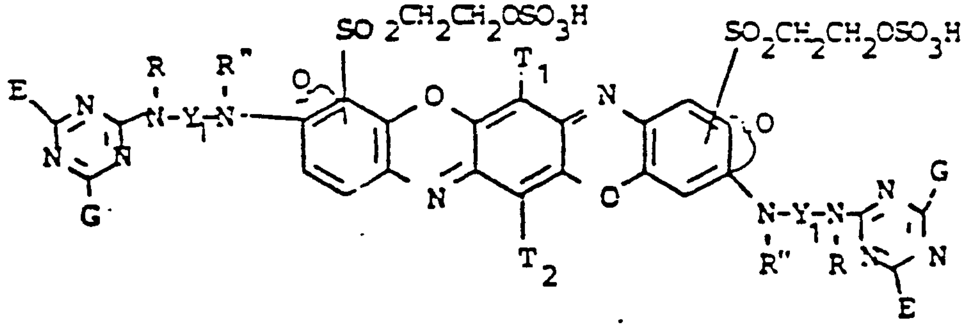

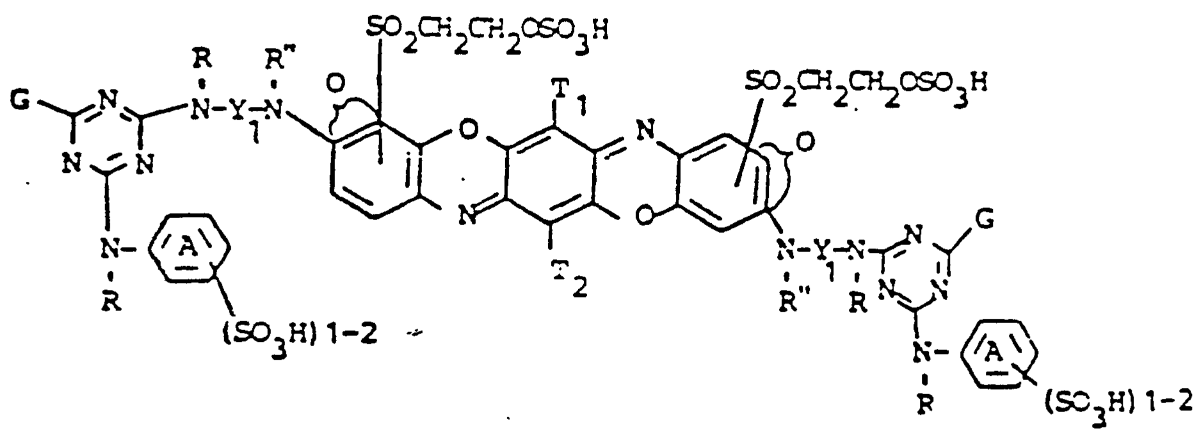

où

E = groupe amino éventuellement substitué

C = F ou Cl

$Y_1$ = reste aliphatique,

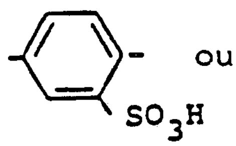 ou 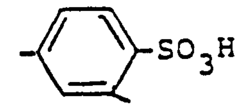

et les noyaux benzéniques A peuvent porter d'autres substituants, et $T_1$, $T_2$, R'', Y et R ont la définition indiquée dans les revendications 1 et 2.

5. Colorants suivant la revendication 4, avec $Y_1$ = $-(CH_2)_{2\text{-}4}$ ou $-CH_2CH\text{-}CH_3$ et G = F

6. Colorants suivant les revendications 4 et 5, avec R, R'' = H.

7. Colorants de formule

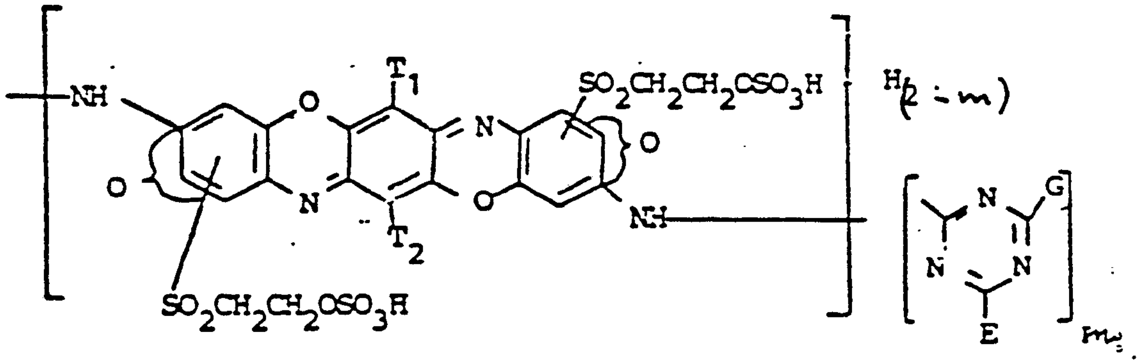

dans laquelle E, G, $T_1$ et $T_2$ ont la définition indiquée dans la revendication 4 et m a la valeur 1 ou 2.

8. Utilisation des colorants des revendications 1 à 7 pour la teinture de matières fibreuses contenant des groupes hydroxyle ou des groupes amide.

9. Matières fibreuses contenant des groupes hydroxyle ou des groupes amide teintes avec les colorants des revendications 1 à 7.